(19) Europäisches Patentamt
European Patent Office
Office européen des brevets

(11) EP 2 759 818 A2

(12) EUROPEAN PATENT APPLICATION

(43) Date of publication:
30.07.2014 Bulletin 2014/31

(51) Int Cl.:
G01J 3/26 (2006.01)

(21) Application number: 14152626.9

(22) Date of filing: 27.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.01.2013 JP 2013014035

(71) Applicant: Seiko Epson Corporation
Shinjuku-ku
Tokyo 163-0811 (JP)

(72) Inventor: Matsushita, Tomonori
Nagano 392-8502 (JP)

(74) Representative: HOFFMANN EITLE
Patent- und Rechtsanwälte
Arabellastrasse 4
81925 München (DE)

(54) **Optical module, and electronic apparatus**

(57)    An optical module includes a stationary substrate (51), a movable substrate (52), a stationary reflecting film (54) provided to the stationary substrate, a movable reflecting film (55) provided to the movable substrate and opposed to the stationary reflecting film, a first control electrode (571) disposed outside the stationary reflecting film in a filter plan view, a second control electrode (572) disposed outside the movable reflecting film in the filter plan view, and opposed to the first control electrode, and a tilt control section (152) adapted to make a first control current flow through the first control electrode, and make a second control current, which has an opposite direction to the first control current in the filter plan view, flow through the second control electrode.

FIG. 1

**Description**

BACKGROUND

1. Technical Field

The present invention relates to an optical module and an electronic apparatus.

2. Related Art

In the past, there has been known a variable wavelength interference filter having a pair of reflecting films opposed to each other and varying a gap dimension between the reflecting films to thereby take out the light having a predetermined wavelength from the light as the measurement target (see, e.g., JP-A-7-243963 (Document 1)).

The variable wavelength interference filter (the optical resonator) described in Document 1 is provided with a first substrate and a second substrate opposed to each other, reflecting films provided to the respective substrates and opposed to each other via an inter-reflecting film gap, and electrodes provided to the respective substrates and opposed to each other. In such a variable wavelength interference filter, by applying a voltage between the electrodes, it becomes possible to deform a diaphragm disposed to the second substrate to thereby control the inter-reflecting film gap.

Incidentally, in the variable wavelength interference filter of Document 1, in the case in which, for example, the rigidity and the thickness dimension of the diaphragm are uneven, it is possible that the diaphragm fails to be deflected evenly, and the parallelism between the reflecting mirrors is degraded when changing the gap dimension of the inter-reflecting film gap. Further, there is also the case in which the reflecting films fail to be kept parallel to each other in an initial state with no voltage applied between the electrodes, and in such a case, there is a problem that when changing the gap dimension using an electrostatic attractive force, the parallelism between the reflecting films becomes worse, and the resolution of the variable wavelength interference filter is degraded.

SUMMARY

An advantage of some aspects of the invention is to provide an optical module having high resolution, and an electronic apparatus.

An optical module according to an aspect of the invention includes a first substrate, a second substrate disposed so as to be opposed to the first substrate, a first reflecting film provided to the first substrate, and adapted to reflect a part of incident light and transmit a part of the incident light, a second reflecting film provided to the second substrate, opposed to the first reflecting film, and adapted to reflect a part of the incident light and transmit a part of the incident light, a first control electrode provided to the first substrate, a second control electrode provided to the second substrate, and opposed to the first control electrode, and a tilt control section adapted to make a first control current flow through the first control electrode in a first direction along a substrate surface of the first substrate, and make a second control current flow through the second control electrode in a second direction along a substrate surface of the second substrate, the second direction being opposite to the first direction in a plan view of the first substrate and the second substrate viewed from a substrate thickness direction.

In the aspect of the invention, the first control current and the second control current are opposed to each other, and the first control current flowing through the first control electrode and the second control current flowing through the second control electrode have the directions opposite to each other. Therefore, a repulsive force due to the Lorentz force acts between the first control electrode and the second control electrode. In the case in which the gap dimension between the first control electrode and the second control electrode is sufficiently small compared to the curvature radius of the first control electrode and the second control electrode, the Lorentz force is inversely proportional to the gap dimension between the first control electrode and the second control electrode. Therefore, a weak repulsive force acts on a part with the large gap dimension, while a strong repulsive force acts on a part with the small gap dimension. In other words, in the case in which the second substrate is tilted with respect to the first substrate, it results that the repulsive force acts so as to suppress the tilt, and thus, the degradation of parallelism between the first reflecting film and the second reflecting film can be suppressed. Thus, it becomes possible to keep the optical module in a high resolution state.

In the optical module according to the aspect of the invention described above, it is preferable that a gap dimension between the first control electrode and the second control electrode is smaller than a gap dimension between the first reflecting film and the second reflecting film.

In this configuration, when the gap changing section changes the gap dimension between the reflecting films, the first control electrode and the second control electrode have contact with each other to prevent the first reflecting film and the second reflecting film from having contact with each other, and thus, the deterioration of the first reflecting film and the second reflecting film due to the contact can be prevented.

In the optical module according to the aspect of the invention described above, it is preferable that the first control electrode is disposed outside the first reflecting film in the plan view, and the second control electrode is disposed outside the second reflecting film in the plan view.

In this configuration, the first control electrode and the second control electrode are disposed outside the first reflecting film and the second reflecting film, respectively. In such a configuration, the effective area (the area of a region where the light with the desired wavelength is transmitted or reflected due to interference) of the first reflecting film and the second reflecting film can be enlarged. Further, in the case of adopting a configuration in which the first reflecting film and the second reflecting film do not have contact with (are insulated from) the first control electrode and the second control electrode, by using the material having electrical conductivity as the first reflecting film and the second reflecting film, it becomes possible to use the first reflecting film and the second reflecting film as electrodes such as capacitance detecting electrodes.

In the optical module according to the aspect of the invention described above, it is preferable that the first control electrode is disposed so as to overlap the first reflecting film in the plan view, and the second control electrode is disposed so as to overlap the second reflecting film in the plan view.

In this configuration, the first control electrode is disposed in an area overlapping the first reflecting film, and the second control electrode is disposed in an area overlapping the second reflecting film. Therefore, since the first control electrode and the second control electrode make the repulsive force act directly on the area where the first reflecting film and the second reflecting film are disposed, the tilt of the reflecting films can accurately be improved, and thus, the parallelism can further be improved.

In the optical module according to the aspect of the invention described above, it is preferable that at least either one of the first control electrode and the second control electrode is provided with an insulating film formed on a surface opposed to the other of the first control electrode and the second control electrode.

In this configuration, the short circuit caused when the first control electrode and the second control electrode have contact with each other can be prevented.

In the optical module according to the aspect of the invention described above, it is preferable that the optical module further includes a gap changing section adapted to change a gap dimension between the first reflecting film and the second reflecting film.

In this configuration, the gap changing section can change the gap dimension between the first reflecting film and the second reflecting film, and thus, the wavelength of the light to be transmitted through the first reflecting film and the second reflecting film can be changed.

Further, in the case in which the gap changing section changes the gap dimension, the second substrate might fail to be deflected evenly due to, for example, the rigidity of the second substrate to tilt the second reflecting film with respect to the first reflecting film in some cases. In contrast, in the configuration described above, by controlling the first control current and the second control current flowing through the first control electrode and the second control electrode using the tilt control section, it is possible to make the repulsive force act in the direction of suppressing the tilt. Therefore, the parallelism between the first reflecting film and the second reflecting film can appropriately be maintained.

In the optical module according to the aspect of the invention described above, it is preferable that the tilt control section makes the first control current and the second control current flow during a period until fluctuation of the gap dimension is settled when the gap changing section changes the gap dimension.

When the gap changing section deflects the second substrate, the second substrate vibrates due to the spring force provided to the second substrate, and the gap dimension between the reflecting films fluctuates. Here, by making the first control current described above flow through the first control electrode, and making the second control current described above flow through the second control electrode, the repulsive force due to the Lorentz force can be generated between the electrodes, and the smaller the gap dimension is, the stronger the Lorentz force becomes. Therefore, by making the control currents continue to flow through the first control electrode and the second control electrode during the period in which the second substrate is vibrating, it results that the Lorentz force acts so as to settle the vibration of the second substrate, and thus, the time (the settling time) until the vibration of the second substrate is settled can be reduced.

An optical module according to another aspect of the invention includes at least one first reflecting film having electrical conductivity, and adapted to reflect a part of incident light and transmit a part of the incident light, at least one second reflecting film having electrical conductivity, opposed to the first reflecting film, and adapted to reflect a part of the incident light and transmit a part of the incident light, and a tilt control section adapted to make a first control current flow through the first reflecting film in a first direction along a surface direction of the first reflecting film, and make a second control current flow through the second reflecting film in a second direction along a surface direction of the second reflecting film, the second direction being opposite to the first direction in a plan view of the first reflecting film and the second reflecting film viewed from a film thickness direction.

In this aspect of the invention, the first reflecting film and the second reflecting film are opposed to each other, and the first control current flowing through the first reflecting film and the second control current flowing through the second reflecting film have the directions opposite to each other. Therefore, a repulsive force due to the Lorentz force acts between the first reflecting film and the second reflecting film. Thus, the degradation of the parallelism between the first reflecting film and the second reflecting film can be suppressed, and the optical module with high resolution can be provided.

Further, in this aspect of the invention, the configuration can be simplified compared to a configuration provided with the first control electrode and the second control electrode. Further, it is possible to make the repulsive force act directly on the first reflecting film and the second reflecting film. Further, besides the tilt state of the reflecting films, even in the case in which deflection is caused in the reflecting films, it is also possible to make the repulsive force act in a direction of eliminating the deflection. Thus, it is possible to further improve the parallelism between the reflecting films with higher accuracy.

In the optical module according to the aspect of the invention described above, it is preferable that the optical module further includes a first substrate provided with the first reflecting film, and a second substrate provided with the second reflecting film.

As the first reflecting film and the second reflecting film constituting the optical module, it is possible to form a configuration in which the first reflecting film and the second reflecting film are disposed so as to be opposed to each other by, for example, forming a first reflecting film on one surface of a sacrifice layer having a plate-like shape, forming a second reflecting film on the other surface, and then removing the sacrifice layer by etching or the like. However, in this case, a deflection might be caused in the first reflecting film and the second reflecting film in some cases. In contrast, according to the configuration described above, since the configuration of disposing the first reflecting film on the first substrate, and disposing the second reflecting film on the second substrate is adopted, the deflection and the tilt of the reflecting films can be suppressed.

In the optical module according to the aspect of the invention described above, it is preferable that the optical module further includes a gap changing section adapted to change a gap dimension between the first reflecting film and the second reflecting film.

In this configuration, the gap changing section can change the gap dimension between the first reflecting film and the second reflecting film, and thus, the wavelength of the light to be transmitted through the first reflecting film and the second reflecting film can be changed.

Further, in the case in which the gap changing section changes the gap dimension, it is possible that, for example, the second reflecting film is deflected due to an influence of the rigidity of the second substrate in the configuration in which the second substrate is provided with the second reflecting film, and the second substrate is deflected toward the first reflecting film. Although in the case of the configuration not provided with the second substrate and the first substrate, the gap between the reflecting films is changed by deflecting the second reflecting film and the first reflecting film, in this case, the deflection is caused in the first reflecting film and the second reflecting film. In contrast, in the configuration described above, since the tilt control section controls the first control current and the second control current flowing through the first reflecting film and the second reflecting film, it is possible to make the repulsive force act in the direction of suppressing the tilt even in the case in which the tilt is caused in the second substrate as described above. Further, in the configuration in which the first substrate and the second substrate are not provided, and the gap dimension between the reflecting films is changed by deflecting the first reflecting film or the second reflecting film, the repulsive force for suppressing the deflection can be generated by making the control currents flow using the tilt control section. Therefore, the parallelism between the first reflecting film and the second reflecting film can appropriately be maintained.

In the optical module according to the aspect of the invention described above, it is preferable that the tilt control section makes the first control current and the second control current flow during a period until fluctuation of the gap dimension is settled when the gap changing section changes the gap dimension.

In this configuration, in the case in which the gap changing section varies the gap dimension between the reflecting films, the control currents are made to continue to flow respectively through the first reflecting film and the second reflecting film until the fluctuation of the gap dimension is settled. Therefore, it results that the Lorentz force acts so as to settle the fluctuation of the gap dimension, and thus, the settling time until the fluctuation of the gap dimension is settled can be shortened.

In the optical module according to the aspect of the invention described above, it is preferable that the first reflecting films are electrically connected to each other, and the second reflecting films are disposed so as to correspond respectively to the first reflecting films, and are electrically connected to each other.

In this configuration, in the case of assuming one of the first reflecting films and the second reflecting film opposed to the first reflecting film as a set of interference section, the repulsive force acts so that the gap dimension between the reflecting films in each of the interference sections is uniformed. Therefore, it is possible to take out (transmit or reflect) the light with the same wavelength from a plurality of interference sections.

In the optical module according to the aspect of the invention described above, it is preferable that the optical module further includes a gap detection section adapted to detect a gap dimension between the first reflecting film and the second reflecting film, and the tilt control section controls the first control current and the second control current in accordance with the gap dimension detected by the gap detection section.

In this configuration, the tilt control section can make the repulsive force due to the Lorentz force act so as to keep the parallelism between the first reflecting film and the second reflecting film by making the first control current and the second control current flow, and in addition, the tilt control section can make the Lorentz force function as the power for changing the gap dimension between the reflecting films. On this occasion, by detecting the gap dimension between the reflecting films using the gap detection section, and then performing the feedback control of the first control current and the second control current described above in accordance with the gap dimension thus detected, the gap dimension between the reflecting films can be controlled with higher accuracy.

In particular, in the case of controlling the gap between the reflecting films using the electrostatic actuator composed of the electrodes opposed to each other, the electrostatic attractive force acting on the electrostatic actuator is proportional to the -2th power of the gap dimension between the electrodes. In contrast, in the case in which the gap dimension between the first control electrode and the second control electrode is sufficiently small compared to the curvature radius of the first control electrode and the second control electrode, the Lorentz force is proportional to the -1th power of the gap dimension between the electrode (the first control electrode or the first reflecting film) through which the first control current flows and the electrode (the second control electrode or the second reflecting film) through which the second control current flows. Therefore, the gap control using the Lorentz force is lower in sensitivity than the gap control using the electrostatic attractive force of the electrostatic actuator, and thus, the gap control with high accuracy becomes possible.

An electronic apparatus according to another aspect of the invention includes an optical module including a first substrate, a second substrate disposed so as to be opposed to the first substrate, a first reflecting film provided to the first substrate, and adapted to reflect a part of incident light and transmit a part of the incident light, a second reflecting film provided to the second substrate, opposed to the first reflecting film, and adapted to reflect a part of the incident light and transmit a part of the incident light, a first control electrode provided to the first substrate, a second control electrode provided to the second substrate, and opposed to the first control electrode, and a tilt control section adapted to make a first control current flow through the first control electrode in a first direction along a substrate surface of the first substrate, and make a second control current flow through the second control electrode in a second direction along a substrate surface of the second substrate, the second direction being opposite to the first direction in a plan view of the first substrate and the second substrate viewed from a substrate thickness direction, and a control section adapted to control the optical module.

In this aspect of the invention, similarly to the aspects of the invention described above, by controlling the first control current and the second control current flowing respectively through the first control electrode and the second control electrode using the tilt control section, the parallelism between the first reflecting film and the second reflecting film can appropriately be maintained, and thus, the light with the desired wavelength can be taken out (transmitted or reflected) at high resolution. Therefore, when performing a variety of types of process such as a colorimetric process or a analysis process based on such light as described above, a highly accurate process can be realized.

An electronic apparatus according to another aspect of the invention includes an optical module including at least one first reflecting film having electrical conductivity, and adapted to reflect a part of incident light and transmit a part of the incident light, at least one second reflecting film having electrical conductivity, opposed to the first reflecting film, and adapted to reflect a part of the incident light and transmit a part of the incident light, and a tilt control section adapted to make a first control current flow through the first reflecting film in a first direction along a surface direction of the first reflecting film, and make a second control current flow through the second reflecting film in a second direction along a surface direction of the second reflecting film, the second direction being opposite to the first direction in a plan view of the first reflecting film and the second reflecting film viewed from a film thickness direction, and a control section adapted to control the optical module.

In this aspect of the invention, similarly to the aspects of the invention described above, by controlling the first control current and the second control current flowing respectively through the first reflecting film and the second reflecting film using the tilt control section, the parallelism between the first reflecting film and the second reflecting film can appropriately be maintained, and thus, the light with the desired wavelength can be taken out (transmitted or reflected) at high resolution. Therefore, when performing a variety of types of process such as a colorimetric process or a analysis process based on such light as described above, a highly accurate process can be realized.

An optical module according to another aspect of the invention includes a first substrate, a first reflecting film provided to the first substrate, and adapted to reflect a part of incident light and transmit a part of the incident light, at least one second reflecting film opposed to the first reflecting film, and adapted to reflect a part of the incident light and transmit a part of the incident light, a first control electrode, which is provided to the first substrate, and through which a first control current flows in a first direction along a substrate surface of the first substrate, and a second control electrode, which is provided to a same base member as the second reflecting film so as to be opposed to the first control electrode, and through which a second control current flows in a second direction opposite to the first direction in a plan view viewed from a thickness direction of the first substrate.

In this aspect of the invention, similarly to the aspects of the invention described above, since the first control current and the second control current flowing respectively through the first control electrode and the second control electrode have the directions opposite to each other in the plan view, the parallelism between the first reflecting film and the second reflecting film can appropriately be maintained by the repulsive force due to the Lorentz force, and thus, the light with the desired wavelength can be taken out (transmitted or reflected) at high resolution.

BRIEF DESCRIPTION OF THE DRAWINGS

The invention will be described with reference to the accompanying drawings, wherein like numbers reference like elements.

Fig.1 is a block diagram showing a schematic configuration of a spectroscopic measurement device according to a first embodiment of the invention.

Fig. 2 is a plan view showing the variable wavelength interference filter according to the first embodiment.

Fig. 3 is a cross-sectional view of the variable wavelength interference filter along the III-III line shown in Fig. 2.

Fig. 4 is a plan view of a stationary substrate viewed from a movable substrate side in the variable wavelength interference filter according to the first embodiment.

Fig. 5 is a plan view of the movable substrate viewed from the stationary substrate side in the variable wavelength interference filter according to the first embodiment.

Fig. 6 is a diagram showing a Lorentz force (a repulsive force) generated when making a current flow through each of control electrodes in a state in which a movable section is tilted in the variable wavelength interference filter according to the first embodiment.

Fig. 7 is a diagram showing the Lorentz force (the repulsive force) generated when making a current flow through each of the control electrodes in a state in which the movable section is not tilted in the variable wavelength interference filter according to the first embodiment.

Fig. 8 is a diagram showing the Lorenz force to be applied between the control electrodes and an electrostatic attractive force to be applied to the electrostatic actuator when transmitting light with each wavelength from the variable wavelength interference filter according to the first embodiment.

Fig. 9 is a plan view of the stationary substrate of a variable wavelength interference filter according to a modified example of the first embodiment viewed from a movable substrate side.

Fig. 10 is a diagram showing a configuration of a stationary reflecting film and a movable reflecting film, and control currents flowing through these reflecting films in a variable wavelength interference filter according to a second embodiment of the invention.

Fig. 11 is a cross-sectional view showing a schematic configuration of a variable wavelength interference filter according to a modified example of the second embodiment of the invention.

Fig. 12 is a diagram showing a connection configuration of a stationary reflecting film of the variable wavelength interference filter according to the modified example of the second embodiment.

Fig. 13 is a diagram showing a connection configuration of a movable reflecting film of the variable wavelength interference filter according to the modified example of the second embodiment.

Fig. 14 is a diagram showing a connection configuration of a stationary reflecting film of a variable wavelength interference filter according to another modified example of the second embodiment.

Fig. 15 is a diagram showing a schematic configuration of an optical module according to a third embodiment of the invention.

Fig. 16 is a diagram showing an example of an electrode pattern of a first control electrode according to another embodiment of the invention.

Fig. 17 is a diagram showing another example of the electrode pattern of the first control electrode according to another embodiment of the invention.

Fig. 18 is a diagram showing another example of the electrode patterns of the first control electrode and the second control electrode according to another embodiment of the invention.

Fig. 19 is a diagram showing still another example of the electrode patterns of the first control electrode and the second control electrode according to another embodiment of the invention.

Fig. 20 is a diagram showing another example of the electrode pattern of the first control electrode according to another embodiment of the invention.

Fig. 21 is a perspective view showing a configuration of an optical filter device according to another embodiment of the invention.

Fig. 22 is a block diagram showing a schematic configuration of a colorimetric device as another example of an electronic apparatus according to an embodiment of the invention.

Fig. 23 is a schematic diagram of a gas detection device as another example of the electronic apparatus according to an embodiment of the invention.

Fig. 24 is a block diagram showing a control system of the gas detection device shown in Fig. 23.

Fig. 25 is a block diagram showing a schematic configuration of a food analysis device as another example of the electronic apparatus according to an embodiment of the invention.

Fig. 26 is a schematic diagram showing a schematic configuration of a spectroscopic camera as another example of the electronic apparatus according to an embodiment of the invention.

DESCRIPTION OF EXEMPLARY EMBODIMENTS

First Embodiment

A first embodiment of the invention will hereinafter be explained with reference to the accompanying drawings.

Configuration of Spectroscopic Measurement Device

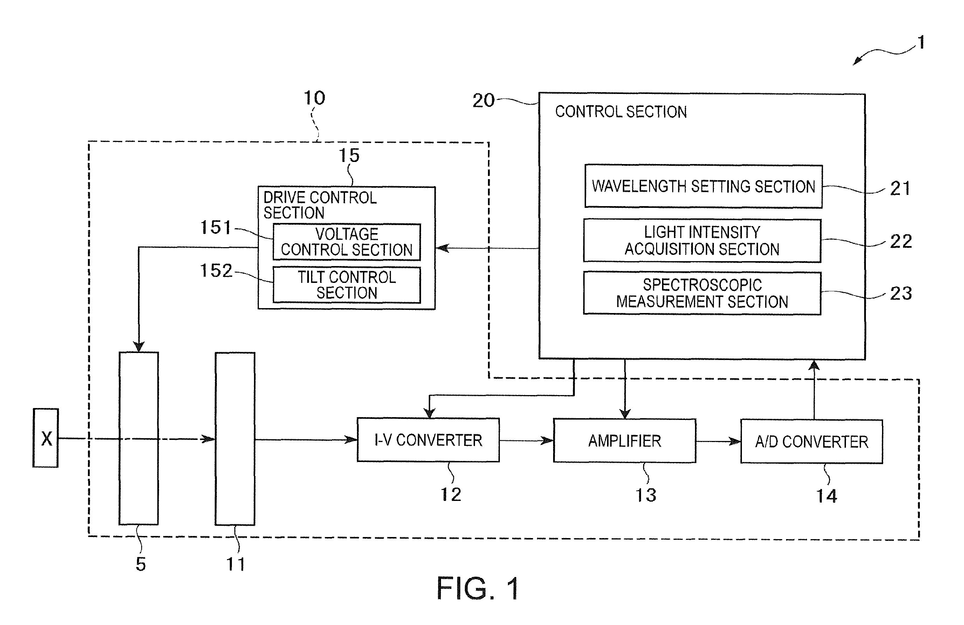

Fig. 1 is a block diagram showing a schematic configuration of a spectroscopic measurement device according to the present embodiment.

The spectroscopic measurement device 1 is an example an electronic apparatus according to an embodiment of the invention, and is a device for analyzing the light intensity of each wavelength in measurement target light having been reflected by, for example, a measurement target X to thereby measure the dispersion spectrum. It should be noted that although in the present embodiment, the example of measuring the measurement target light reflected by the measurement target X is described, in the case of using a light emitting body such as a liquid crystal panel as the measurement target X, it is possible to use the light emitted from the light emitting body as the measurement target light.

Further, as shown in Fig. 1, the spectroscopic measurement device 1 is provided with an optical module 10, and a control section 20 for processing a signal output from the optical module 10.

Configuration of Optical Module

The optical module 10 is provided with a variable wavelength interference filter 5, a detector 11, an I-V converter 12, an amplifier 13, an A/D converter 14, and a drive control section 15.

The optical module 10 guides the measurement target light reflected by the measurement target X to the variable wavelength interference filter 5 through an incident optical system (not shown), and then receives the light, which has been transmitted through the variable wavelength interference filter 5, using the detector 11. Then, a detection signal output from the detector 11 is output to the control section 20 via the I-V converter 12, the amplifier 13, and the A/D converter 14.

Configuration of Variable Wavelength Interference Filter

Then, the variable wavelength interference filter 5 to be incorporated in the optical module 10 will be explained.

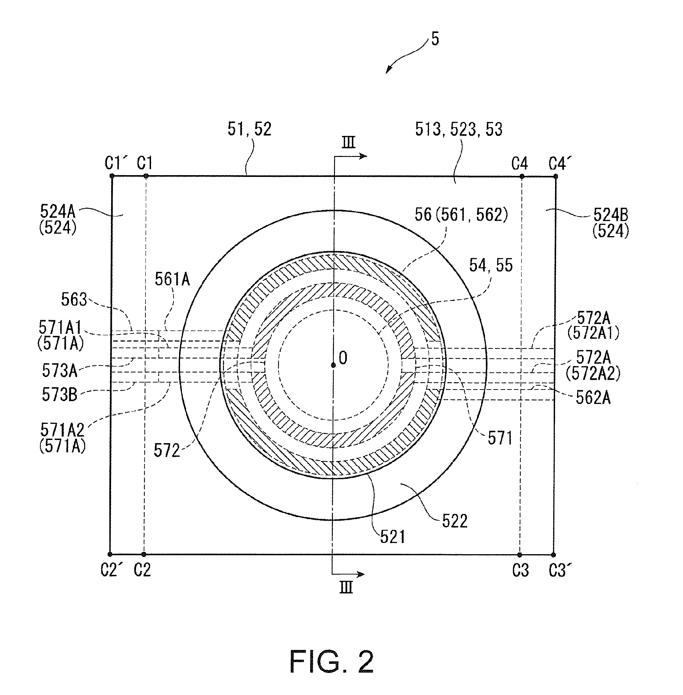

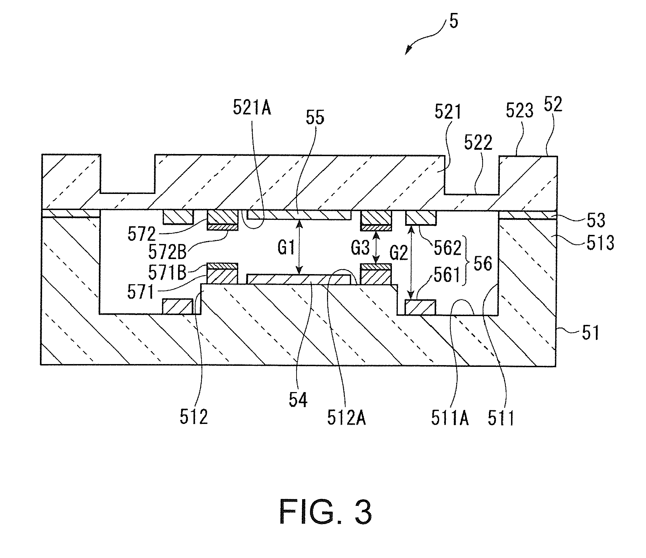

Fig. 2 is a plan view showing a schematic configuration of the variable wavelength interference filter 5. Fig. 3 is a cross-sectional view when making a cross-section along the III-III line shown in Fig. 2.

As shown in Figs. 2 and 3, the variable wavelength interference filter 5 is provided with a stationary substrate 51 constituting a first substrate and a movable substrate 52 constituting a second substrate. The stationary substrate 51 and the movable substrate 52 are each made of a variety of types of glass such as soda glass, crystalline glass, quartz glass, lead glass, potassium glass, borosilicate glass, or alkali-free glass, or a quartz crystal, for example. Further, the stationary substrate 51 and the movable substrate 52 are integrally configured by a first bonding section 513 of the stationary substrate 51 and the second bonding section 523 of the movable substrate 52 being bonded to each other with a bonding film 53 formed of, for example, a plasma-polymerized film consisting primarily of siloxane.

A stationary reflecting film 54 constituting a first reflecting film in the invention is disposed on a surface of the stationary substrate 51, the surface being opposed to the movable substrate 52, and a movable reflecting film 55 constituting a second reflecting film in the invention is disposed on a surface of the movable substrate 52, the surface being opposed to the stationary substrate 51. The stationary reflecting film 54 and the movable reflecting film 55 are disposed so as to be opposed to each other via a gap G1. Further, in a plan view of the stationary substrate 51 and the movable substrate 52 viewed from the thickness direction thereof, the region where the stationary reflecting film 54 and the movable reflecting film 55 overlap each other constitutes an optical interference region.

The variable wavelength interference filter 5 is provided with the electrostatic actuator 56, which is an example of a gap changing section in the invention, and used for adjusting (changing) the gap dimension of the gap G1. Such an electrostatic actuator 56 is capable of easily changing the dimension of the gap G1 using the electrostatic attractive force by applying a predetermined voltage between the electrodes opposed to each other, and thus, simplification of the configuration can be achieved. It becomes possible to drive the electrostatic actuator 56 by the control of the drive control section 15.

Further, a first control electrode 571 is disposed on a surface of the stationary substrate 51, the surface being opposed to the movable substrate 52, and a second control electrode 572 is disposed on a surface of the movable substrate 52, the surface being opposed to the stationary substrate 51. The first control electrode 571 and the second control electrode 572 are disposed so as to be opposed to each other. Further, although the details will be described later, by making control currents respectively flow through the first control electrode 571 and the second control electrode 572, the tilt between the reflecting films 54, 55 can be controlled.

It should be noted that in the explanation below, a plan view viewed from the substrate thickness direction of the stationary substrate 51 or the movable substrate 52, namely a plan view of the variable wavelength interference filter 5 viewed from the stacking direction of the stationary substrate 51 and the movable substrate 52, is referred to as a filter plan view. Further, in the present embodiment, the center point of the stationary reflecting film 54 and the center point of the movable reflecting film 55 coincide with each other in the filter plan view, the center points of these reflecting films in the plan view are referred to as a filter center point O, and a straight line passing through these center points of the reflecting films is referred to as a center axis.

Configuration of Stationary Substrate

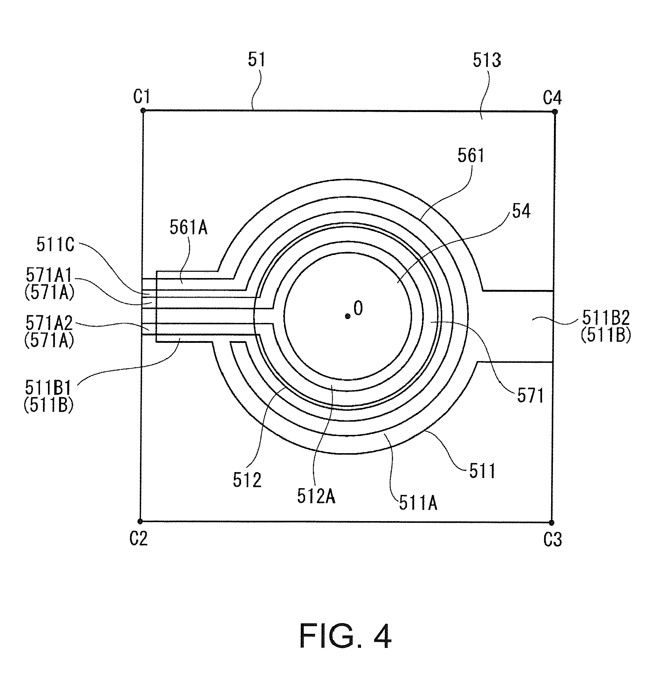

Fig. 4 is a plan view of the stationary substrate 51 according to the present embodiment viewed from the movable substrate 52 side.

The stationary substrate 51 is formed to have a thickness dimension larger than that of the movable substrate 52, and no distortion is caused in the stationary substrate 51 by the electrostatic attractive force due to the electrostatic actuator 56 or an internal stress of a film member (e.g., the stationary reflecting film 54) formed on the stationary substrate 51.

As shown in Figs. 3 and 4, the stationary substrate 51 is provided with an electrode arrangement groove 511 and a reflecting film installation section 512 each formed by, for example, etching.

The electrode arrangement groove 511 is formed to have a ring-like shape cantered on the filter center point O of the stationary substrate 51 in the filter plan view. The reflecting film installation section 512 is formed so as to protrude toward the movable substrate 52 from a central portion of the electrode arrangement groove 511 in the filter plan view. The bottom surface of the electrode arrangement groove 511 forms an electrode installation surface 511A on which a first drive electrode 561 constituting the electrostatic actuator 56 is disposed. Further, a protrusion tip surface of the reflecting film installation section 512 forms a reflecting film installation surface 512A on which the stationary reflecting film 54 and the first control electrode 571 are disposed.

Further, the stationary substrate 51 is provided with electrode extraction grooves 511B each extending from the electrode arrangement groove 511 toward an outer peripheral edge of the stationary substrate 51. Specifically, the stationary substrate 51 is provided with the electrode extraction groove 511B1 extending toward a side C1-C2 of the stationary substrate 51 and the electrode extraction groove 511B2 extending toward a side C3-C4. Here, the electrode extraction groove 511B2 extends to the outer peripheral edge of the stationary substrate 51, and the electrode extraction groove 511B1 extends to a position shifted a predetermined dimension toward the filter center point O from the outer peripheral edge of the stationary substrate 51. An electrode connection section 511C is disposed at an extending tip of the electrode extraction groove 511B1, and a surface of the electrode connection section 511C opposed to the movable substrate 52 is coplanar with a surface of the first bonding section 513 opposed to the movable substrate 52.

The first drive electrode 561 constituting the electrostatic actuator 56 is disposed on the electrode installation surface 511A of the electrode arrangement groove 511. The first drive electrode 561 can also be disposed directly on the electrode arrangement surface 511A, or disposed on another thin film (layer) disposed on the electrode arrangement surface 511A.

More specifically, the first drive electrode 561 is formed to have a C-shaped circular arc shape centered on the filter center point O, and is provided with a C-shaped opening section disposed in a part adjacent to the side C1-C2. Further, a first drive extraction electrode 561A is connected to the first drive electrode 561, and is extracted along the electrode extraction groove 511B1 to the outer peripheral edge of the stationary substrate 51. In other words, the first drive extraction electrode 561A is disposed continuously from the electrode extraction groove 511B1 to the electrode connection section 511C. As a material for forming such a first drive electrode 561 and a first drive extraction electrode 561A as described above, indium tin oxide (ITO), for example, can be cited.

Further, the first drive electrode 561 can also be provided with an insulating film formed on the surface thereof.

As described above, the reflecting film installation section 512 is formed to have a roughly columnar shape coaxial with the electrode arrangement groove 511 and having a diameter smaller than that of the electrode arrangement groove 511, and is provided with the reflecting film installation surface 512A opposed to the movable substrate 52.

The reflecting film installation section 512 is provided with the stationary reflecting film 54, and the first control electrode 571.

The stationary reflecting film 54 can also be disposed directly on the reflecting film installation section 512, or disposed on another thin film (layer) disposed on the reflecting film installation section 512. As the stationary reflecting film 54, a metal film made of, for example, Ag, or a conductive alloy film made of, for example, an Ag alloy can be used. In the case of using the metal film made of, for example, Ag, it is preferable to form a protective film for inhibiting the deterioration of Ag.

Further, it is also possible to use a dielectric multilayer film having the high refractive index layer made of $TiO_2$ and the low refractive index layer made of $SiO_2$, and formed by alternately stacking the high refractive index layers and the low refractive index layers, and it is also possible to use a reflecting film composed of a dielectric multilayer film and a metal film stacked on each other, a reflecting film composed of a dielectric monolayer film and an alloy film stacked on each other, and so on.

The first control electrode 571 is disposed outside the stationary reflecting film 54 in the filter plan view. More specifically, the first control electrode 571 is formed to have a C-shaped circular arc shape centered on the filter center point O, and is provided with a C-shaped opening section disposed in a part adjacent to the side C1-C2. Further, as shown in Fig. 4, a first control extraction electrode 571A1 for input is connected to one (a vertex C1 side) of the ends of the C-shaped opening section of the first control electrode 571, and a first control extraction electrode 571A2 for output is connected to the other (a vertex C2 side) of the ends of the C-shaped opening section of the first control electrode 571.

These first control extraction electrodes 571A (571A1, 571A2) are each extracted along the electrode extraction groove 511B1 to the outer peripheral edge of the stationary substrate 51. In other words, the first control extraction electrodes 571A are each disposed continuously from the electrode extraction groove 511B1 to the electrode connection section 511C.

As a material for forming such a first control electrode 571 and a first control extraction electrodes 571A as described above, the same material as that of the first drive electrode 561 and the first drive extraction electrode 561A can be used, and indium tin oxide (ITO), for example, can be used.

Further, on a surface of the first control electrode 571, there is deposited an insulating film 571B.

Further, it is also possible to form an antireflection film on a plane of incidence of light (the surface not provided with the stationary reflecting film 54) of the stationary substrate 51 at a position corresponding to the stationary reflecting film 54. The antireflection film can be formed by alternately stacking low refractive index films and high refractive index films, and decreases the reflectance with respect to the visible light on the surface of the stationary substrate 51, while increasing the transmittance thereof.

Configuration of Movable Substrate

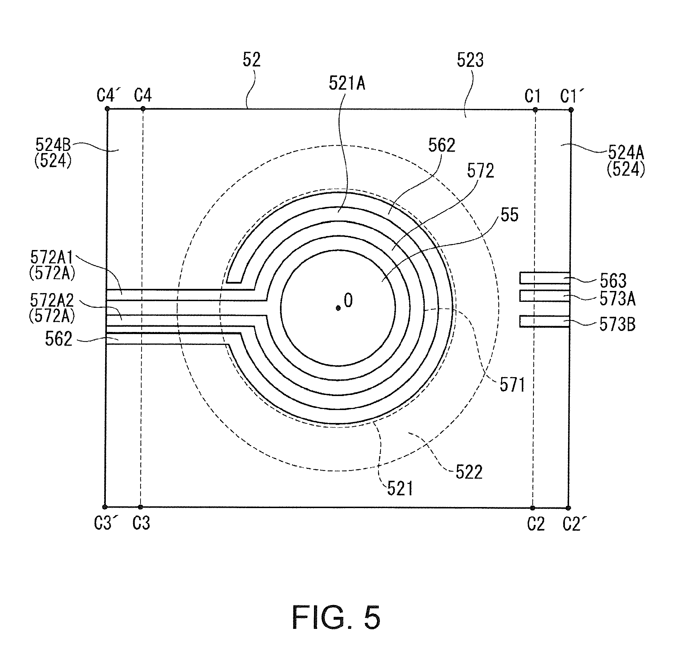

Fig. 5 is a plan view of the movable substrate 52 in the variable wavelength interference filter according to the present embodiment viewed from the stationary substrate 51 side.

As shown in Figs. 2 and 4, in the filter plan view, the movable substrate 52 is provided with the movable section 521 having a circular shape centered on the filter center point O, a holding section 522 coaxial with the movable section 521 and for holding the movable section 521, a second bonding section 523 disposed outside the holding section 522, and a terminal section 524 disposed outside the second bonding section 523.

The movable section 521 is formed to have a thickness dimension larger than that of the holding section 522, and is formed in the present embodiment, for example, to have the same thickness dimension as that of the movable substrate 52 (the second bonding section 523 and the terminal section 524). The movable section 521 is formed to have a diameter larger than at least the diameter of the outer peripheral edge of the reflecting film installation surface 512A in the filter plan view. Further, the movable section 521 is provided with the second drive electrode 562 constituting the electrostatic actuator 56, the movable reflecting film 55, and the second control electrode 572. The second drive electrode 562, the movable reflecting film 55, and the second control electrode 572 can also be disposed directly on a movable surface 521A, or disposed on another thin film (layer) disposed on the movable surface 521A.

It should be noted that an antireflection film can also be formed on the opposite surface of the movable section 521 to the stationary substrate 51 similarly to the case of the stationary substrate 51.

The second drive electrode 562 is formed to have a C-shaped circular arc shape centered on the filter center point O, and is provided with a C-shaped opening section formed in a part adjacent to a side C3'-C4' corresponding to the side C3-C4 of the stationary substrate 51. Further, a second drive extraction electrode 562A is connected to the second drive electrode 562, and is extracted along an area opposed to the electrode extraction groove 511B2 to the outer peripheral edge of the movable substrate 52. In other words, the second drive extraction electrode 562A is disposed continuously from the movable section 521 to the terminal section 524. As a material for forming such a second drive electrode 562 and a second drive extraction electrode 562A as described above, ITO, for example, can be cited. Further, the second drive extraction electrode 562A is connected to the drive control section 15 in the terminal section 524 with, for example, FPC or lead wires.

Further, the second drive electrode 562 can also be provided with an insulating film formed on the surface thereof.

As shown in Fig. 2, in the present embodiment, the area (the area indicated by downward hatching in Fig. 2) where the first drive electrode 561 and the second drive electrode 562 overlap each other constitutes the electrostatic actuator 56. Thus, since the electrostatic actuator 56 can generate the electrostatic attractive force in the regions point-symmetrical about the filter center point O, it becomes possible to displace the movable section 521 toward the stationary substrate 51 in a balanced manner while suppressing the tilt of the movable section 521.

The movable reflecting film 55 is disposed at the central portion of the movable surface 521A of the movable section 521 so as to be opposed to the stationary reflecting film 54 via the gap G1. As the movable reflecting film 55, a reflecting film having the same configuration as that of the stationary reflecting film 54 described above is used.

It should be noted that although the example in which the gap G2 between the drive electrodes 561, 562 is larger than the gap G1 between the reflecting films 54, 55 is shown in the present embodiment, the invention is not limited to this example. In the case, for example, of using an infrared beam or a far infrared beam as the measurement target light, it is also possible to adopt the configuration in which the gap G1 is larger than the gap G2 depending on the wavelength band of the measurement target light.

The second control electrode 572 is disposed outside the movable reflecting film 55, and on the filter center point O side of the second drive electrode 562 in the filter plan view, and is opposed to the first control electrode 571. More specifically, the second control electrode 572 is formed to have a C-shaped circular arc shape centered on the filter center point O, and is provided with a C-shaped opening section disposed in a part adjacent to the side C3'-C4'. Further, as shown in Fig. 5, a second control extraction electrode 572A1 for input is connected to one (a vertex C4' side) of the ends of the C-shaped opening section of the second control electrode 572, and a second control extraction electrode 572A2 for output is connected to the other (a vertex C3' side) of the ends of the C-shaped opening section. These second control extraction electrodes 572A (572A1, 572A2) are each extracted along the electrode extraction groove 511B2 to the outer peripheral edge of the movable substrate 52. In other words, the second control extraction electrodes 572A are each disposed continuously from the movable section 521 to the terminal section 524. Further, the second control extraction electrodes 572A are each connected to the drive control section 15 in the terminal section 524 with, for example, FPC or lead wires.

As a material for forming the second control electrode 572 and the second control extraction electrodes 572A, the same material as that of the second drive electrode 562 and the second drive extraction electrode 562A can be used, and ITO, for example, can be used.

Further, on a surface of the second control electrode 572, there is deposited an insulating film 572B.

Here, a gap G3 between the insulating film 571B on the first control electrode 571 and the insulating film 572B of the second control electrode 572 is smaller than the gap G1 between the reflecting films 54. 55. Specifically, there are adopted the reflecting films 54, 55, which fulfill the condition that the thickness dimensions of the control electrodes 571, 572 are larger than the thickness dimensions of the reflecting films 54, 55. Further, it is also possible to arrange that the sum of the thickness dimensions of the first control electrode 571 and the insulating film 571B and the sum of the thickness dimensions of the second control electrode 572 and the insulating film 572B are larger than the thickness dimensions of the reflecting films 54, 55, respectively.

Further, in the case of using the laminated film such as dielectric multilayer film as the reflecting films 54, 55, it is also possible to adopt a configuration in which the installation position of the first control electrode 571 in the reflecting film installation section 512 protrudes toward the movable substrate 52 from the reflecting film installation surface 512A.

By making the gap G3 smaller than the gap G1 as described above, the reflecting films 54, 55 can be prevented from having contact with each other.

The holding section 522 is a diaphragm surrounding the periphery of the movable section 521, and is formed to have a thickness dimension smaller than that of the movable section 521. Such a holding section 522 is easier to be deflected than the movable section 521, and it becomes possible to displace the movable section 521 toward the stationary substrate 51 with a weak electrostatic attractive force. On this occasion, since the movable section 521 has a larger thickness dimension and higher rigidity than those of the holding section 522, the shape variation of the movable section 521 can be suppressed to a certain degree even in the case in which the movable section 521 is pulled toward the stationary substrate 51 due to the electrostatic attractive force.

It should be noted that although in the present embodiment, the holding section 522 having a diaphragm shape is shown as an example, the shape is not limited to this example, but a configuration of, for example, providing beam-like holding sections arranged at regular angular intervals centered on the filter center point O of the movable section 521 can also be adopted.

The terminal section 524 is disposed outside the second bonding section 523. Specifically, the terminal section 524 is provided with a terminal section 524A projecting outward from the side C1-C2 of the stationary substrate 51 and a terminal section 524B projecting outward from the side C3-C4 of the stationary substrate 51.

Further, the movable substrate 52 is provided with three connection electrodes 563, 573A, and 573B each disposed continuously from an area of the second bonding section 523, the area being opposed to the electrode connection section 511C of the stationary substrate 51, to the terminal section 524A. In the state in which the stationary substrate 51 and the movable substrate 52 are bonded to each other, the connection electrode 563 is connected to the first drive extraction electrode 561A, the connection electrode 573A is connected to the first control extraction electrode 571A1, and the connection electrode 573B is connected to the first control extraction electrode 571A2. Further, these connection electrodes 563, 573A, and 573B are connected to the drive control section 15 in the terminal section 524 with, for example, FPC or lead wires.

Configuration of Detector, I-V Converter, Amplifier, and A/D Converter of Optical Module

Then, going back to Fig. 1, the optical module 10 will be explained.
The detector 11 receives (detects) the light transmitted through the variable wavelength interference filter 5, and then outputs a detection signal based on the received light intensity to the I-V converter 12.
The I-V converter 12 converts the detection signal input from the detector 11 into a voltage value, and then outputs the voltage value to the amplifier 13.
The amplifier 13 amplifies the voltage value (the detected voltage), which corresponds to the detection signal input from the I-V converter 12.
The A/D converter 14 converts the detected voltage (an analog signal) input from the amplifier 13 into a digital signal, and then outputs the digital signal to the control section 20.

Configuration of Drive Control Section

As shown in Fig. 1, the drive control section 15 is provided with a voltage control section 151 for controlling the drive voltage to be applied to the electrostatic actuator 56, and a tilt control section 152 for controlling the control currents to be made to flow through the first control electrode 571 and the second control electrode 572, respectively.
The voltage control section 151 applies the drive voltage to the electrostatic actuator 56 of the variable wavelength interference filter 5 based on the control by the control section 20. Thus, the electrostatic attractive force occurs between the first drive electrode 561 and the second drive electrode 562 of the electrostatic actuator 56, and the movable section 521 is displaced toward the stationary substrate 51.
The tilt control section 152 makes a first control current flow through the first control electrode 571 along a first direction from the first control extraction electrode 571A1 toward the first control extraction electrode 571A2. Further, the tilt control section 152 makes a second control current flow through the second control electrode 572 along a second direction from the second control extraction electrode 572A1 toward the second control extraction electrode 572A2. In other words, in the filter plan view shown in Fig. 2, the first control current flows through the first control electrode 571 in a counterclockwise direction, and the second control current flows through the second control electrode 572 in a clockwise direction.
Thus, a repulsive force occurs due to the Lorentz force in an area (the area indicated by upward hatching in Fig. 2) where the first control electrode 571 and the second control electrode 572 are opposed to each other.

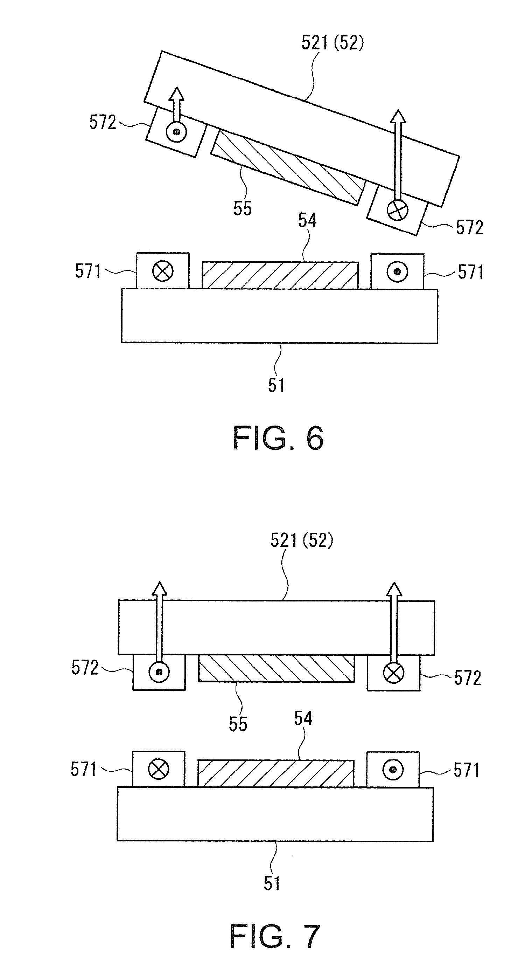

Figs. 6 and 7 are diagrams showing the Lorentz force generated when making the currents flow through the control electrodes 571, 572.
The Lorentz force acting on a minute electrode element dl is denoted with $F_r$, the first control current is denoted with $I_1$, the second control current is denoted with $I_2$, the space permeability is denoted with $\mu_0$, the gap dimension of the gap G3 between the control electrodes 571, 572 is denoted with r, the curvature radius of the first control electrode 571 is denoted with R1, and the curvature radius of the second control electrode 572 is denoted with R2.
In the case in which (curvature radius R1, R2) >> (gap dimension r) is fulfilled, the Lorentz force $F_r$ acting on the minute electrode element dl can be assumed to be the same as the Lorentz force acting between two parallel currents. In fact, since the curvature radius is several millimeters while the gap dimension r is several hundreds of nanometers, the relationship of (curvature radius R1, R2) >> (gap dimension r) is fulfilled. In general, the Lorentz force acting between the two parallel currents can be expressed by Formula 1 below.

$$F_r = (\mu_0 I_1 I_2 / 2\pi r)\, dl \quad \cdots \quad (1)$$

As shown in Formula 1, the smaller the gap dimension of the gap G3 between the control electrodes 571, 572 becomes, the stronger the repulsive force due to the Lorentz force becomes. Thus, in the case in which the movable section 521 is tilted as shown in Fig. 6, it results that the Lorentz force acts so that the gap dimension of the gap G3 is equalized. Further, in the case in which the movable section 521 is not tilted and the reflecting films 54, 55 are parallel to each other as shown in Fig. 7, it results that the even repulsive force acts thereon to thereby keep the parallelism between the reflecting films 54, 55.

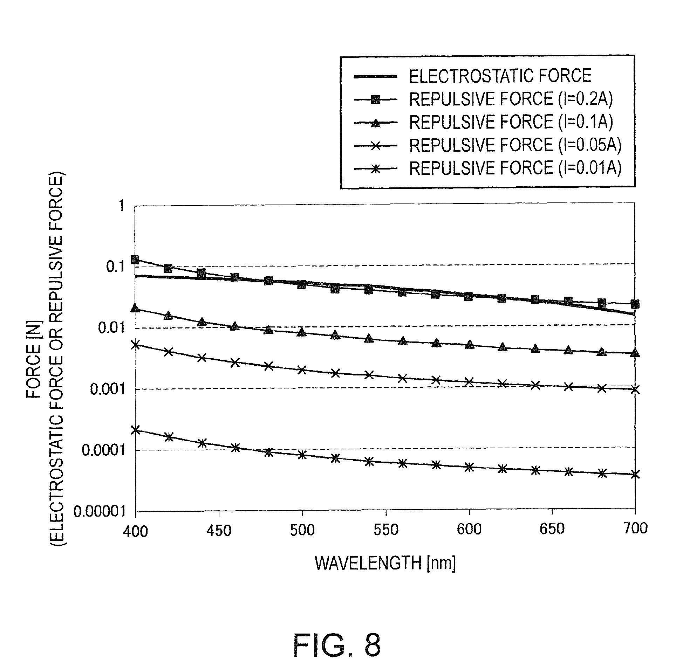

Fig. 8 is a diagram showing an example of the repulsive force (the Lorenz force) to be made to act between the control electrodes 571, 572, and an electrostatic attractive force to be made to act on the electrostatic actuator 56 when taking the light with each wavelength from the variable wavelength interference filter 5.

As shown in Fig. 8, the drive control section 15 sets the drive voltage and the control currents so that the repulsive force to be made to act between the control electrodes 571, 572 becomes roughly the same as or weaker than the electrostatic attractive force to be made to act between the drive electrodes 561, 562.

Fig. 8 shows 0.2 A, 0.1 A, 0.05 A, and 0.01 A as examples of the control current, and it is possible to control the repulsive force between the control electrodes 571, 572 using one of these values. It should be noted that it is also possible to switch the control current to be made to flow through the control electrodes 571, 572 in accordance with the wavelength of the light to be transmitted through the variable wavelength interference filter 5. For example, since the larger the dimension of the gap G3 is, the weaker the repulsive force becomes, it is also possible to perform the control of selecting the control current of, for example, 0.1 A in the case of transmitting the light with a wavelength equal to or longer than a predetermined wavelength (e.g., 500 nm), and selecting the control current of, for example, 0.05 A in the case of transmitting the light with a wavelength shorter than the predetermined wavelength.

Further, as the first control current $I_1$ and the second control current $I_2$, current values different from each other can be adopted. As shown in Formula 1, by appropriately setting the control currents $I_1$, $I_2$, the Lorentz force acting between the control electrodes 571, 572 can more finely be set.

Configuration of Control Section

Then the control section 20 of the spectroscopic measurement device 1 will be explained.

The control section 20 is configured by combining, for example, a CPU and a memory with each other, and controls an overall operation of the spectroscopic measurement device 1. As shown in Fig. 1, the control section 20 is provided with a wavelength setting section 21, a light intensity acquisition section 22, and a spectroscopic measurement section 23. Further, a memory of the control section 20 stores V-λ data representing a relationship between the wavelength of the light to be transmitted through the variable wavelength interference filter 5 and the drive voltage to be applied to the electrostatic actuator 56 corresponding to the wavelength.

It should be noted that in the present embodiment, the repulsive force due to the Lorentz force occurs when making the control currents flow through the control electrodes 571, 572. Therefore, there is stored the drive voltage with which the dimension of the gap G1 between the reflecting films 54, 55 can be set to the dimension corresponding to the predetermined wavelength taking the repulsive force into consideration.

The wavelength setting section 21 sets the target wavelength of the light to be taken out by the variable wavelength interference filter 5, and then outputs a instruction signal to the drive control section 15 based on the V-λ data, the instruction signal instructing to apply the drive voltage corresponding to the target wavelength thus set.

The light intensity acquisition section 22 obtains the light intensity of the light with the target wavelength transmitted through the variable wavelength interference filter 5 based on the light intensity obtained by the detector 11.

The spectroscopic measurement section 23 measures the spectrum characteristics of the measurement target light based on the light intensity obtained by the light intensity acquisition section 22.

Process of Driving Variable Wavelength Interference Filter With Drive Control Section

Then, the process performed when driving the variable wavelength interference filter 5 with such a drive control section 15 as described above will be explained.

The drive control section 15 drives the variable wavelength interference filter 5 based on the instruction signal from the wavelength setting section 21 of the control section 20.

Specifically, the drive voltage corresponding to the instruction signal is applied to the electrostatic actuator 56 of the variable wavelength interference filter 5 using the voltage control section 151, and at the same time, the tilt control section 152 applies the first control current set in advance to the first control electrode 571, and makes the second control current flow through the second control electrode 572.

Thus, the tilt of the movable section 521 is suppressed by the repulsive force due to the Lorentz force generated by the control electrodes 571, 572, and it becomes possible to set the gap dimension of the gap G1 to the target value in the state of keeping the parallelism between the reflecting films 54, 55.

On this occasion, the tilt control section 152 continues to make the control currents flow through the respective control electrodes 571, 572 during the time period (settling time) until the displacement (vibration) of the movable section 521 is settled. By performing such control as described above, reduction of settling time can be achieved. In other words, although the movable section 521 vibrates in accordance with the spring force of the movable substrate 52 (the holding section 522) when applying the drive voltage to the electrostatic actuator 56 to thereby deflect the movable section 521, since the repulsive force counteracting the electrostatic attractive force acts due to the control electrodes 571, 572, a decrease in the vibration rate of the movable section 521 and reduction of the settling time can be achieved.

Functions and Advantages of First Embodiment

In the present embodiment, the variable wavelength interference filter 5 is provided with the first control electrode 571 disposed on the stationary substrate 51, and the second control electrode 572 disposed on the movable substrate 52, and the tilt control section 152 makes the first control current flow through the first control electrode 571, and makes the second control current flow through the second control electrode 572 in the opposite direction to the first control current in the filter plan view.

Therefore, the Lorentz force (the repulsive force) acts on the second control electrode 572 in the direction of getting away from the stationary substrate 51, and the smaller the gap dimension of the gap G3 between the control electrodes 571, 572 is, the stronger the Lorentz force becomes. Therefore, due to such a Lorentz force as described above, the tilt of the movable section 521 can be suppressed, and the degradation of the parallelism between the reflecting films 54, 55 can be suppressed. Thus, the light with the target wavelength can be transmitted from the variable wavelength interference filter 5 at high resolution. Therefore, the accurate light intensity of the light with the target wavelength can be detected in the optical module 10, and the spectroscopic measurement process with high accuracy can be performed based on the accurate light intensity of each of the wavelengths in the spectroscopic measurement device 1.

In the present embodiment, by applying the voltage to the electrostatic actuator 56 using the voltage control section 151, it is possible to set the dimension of the gap

G1 between the reflecting films 54, 55 to a desired value.

Here, when applying the drive voltage to the electrostatic actuator 56, the vibration is caused in the movable section 521 due to the electrostatic attractive force and the spring force provided to the movable substrate 52. In contrast, in the present embodiment, the tilt control section 152 continues to make the control currents flow through the control electrodes 571, 572 during the time period until the vibration of the movable section 521 is settled. Therefore, the force acts in the direction of settling the movable section 521 due to the repulsive force counteracting the electrostatic attractive force, and thus, the settling time until the vibration of the movable section 521 is settled can be shortened.

Therefore, more prompt light intensity acquisition becomes possible, and the time necessary for the spectroscopic measurement process can also be reduced.

In the present embodiment, the gap G3 between the control electrodes 571, 572 is smaller than the gap G1 between the reflecting films 54, 55. Therefore, when decreasing the dimension of the gap G1 between the reflecting films 54, 55, the control electrodes 571, 572 have contact with each other to thereby make it possible to prevent the reflecting films 54, 55 from having contact with each other, and thus, deterioration of the reflecting films 54, 55 due to the contact can be inhibited.

Further, since the insulating films 571B, 572B are disposed on the surfaces of the control electrodes 571, 572, respectively, short circuit can be prevented even in the case in which the control electrodes 571, 572 have contact with each other as described above.

Modified Example of First Embodiment

In the first embodiment described above, there is described the configuration example in which the first control electrode 571 is disposed outside the stationary reflecting film 54 in the filter plan view, and the second control electrode 572 is disposed outside the movable reflecting film 55.

In contrast, it is also possible to adopt a configuration in which the first control electrode 571 is disposed in an area overlapping the stationary reflecting film 54, and the second control electrode 572 is disposed in an area overlapping the movable reflecting film 55.

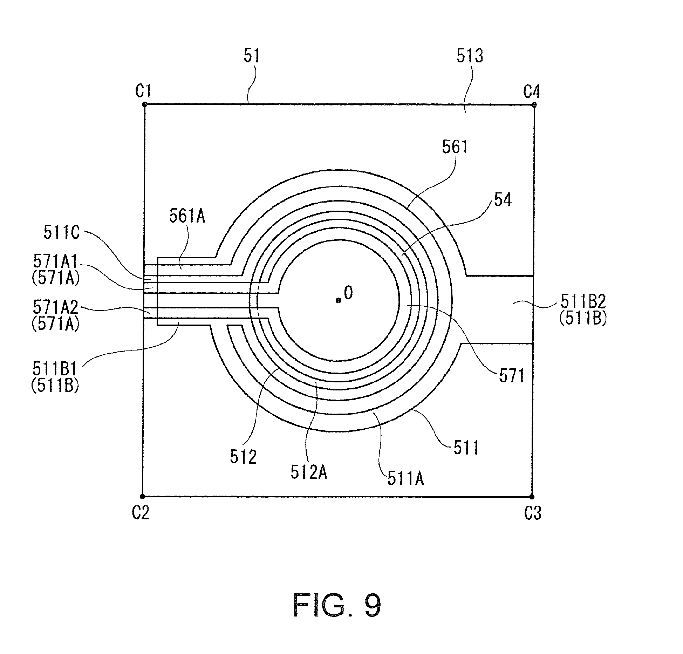

Fig. 9 is a plan view of the stationary substrate 51 in the variable wavelength interference filter according to a modified example of the first embodiment viewed from the movable substrate 52 side. It should be noted that the positional relationship between the movable reflecting film 55 and the second control electrode 572 will be omitted from the drawing.

As shown in Fig. 9, the position at which the first control electrode 571 is disposed can be the surface of the stationary reflecting film 54. In this case, if the stationary reflecting film 54 is formed of a nonconductive material such as a dielectric multilayer film, the first control electrode 571 can be disposed directly on the stationary reflecting film 54. Further, in the case in which the stationary reflecting film 54 is formed of a conductive material such as a metal film, it is possible to dispose the first control electrode 571 via an insulating film.

Further, the second control electrode 572 is similarly disposed on the movable reflecting film 55, and is arranged at a position where the first control electrode 571 and the second control electrode 572 overlap each other in the filter plan view.

In the configuration of disposing the control electrodes 571, 572 on the reflecting films 54, 55 as described above, it is possible to make the repulsive force due to the Lorentz force act directly on the reflecting films 54, 55 by making the control currents flow through the control electrodes 571, 572, and thus the parallelism between the reflecting films 54, 55 can be controlled with higher accuracy. Further, as is understood from the comparison between Figs. 4 and 9, the installation areas of the reflecting films 54, 55 can be enlarged, and thus, the light intensity of the light transmitted through the variable wavelength interference filter 5 can be increased.

Second Embodiment

Then, a second embodiment of the invention will be explained with reference to the accompanying drawings.

In the first embodiment described above, there is described an example of making the control currents, which have the respective directions opposite to each other in the filter plan view, flow respectively through the first control electrode 571 disposed on the stationary substrate 51 and the second control electrode 572 disposed on the movable substrate 52. In contrast, the second embodiment is different from the first embodiment described above in the point that the first control electrode 571 and the second control electrode 572 are eliminated, and the control currents are made to flow through the reflecting films 54, 55.

It should be noted that in explaining the present and subsequent embodiments, the constituents substantially the same as those of the first embodiment described above are denoted with the same reference symbols, and the explanation thereof will be omitted or simplified.

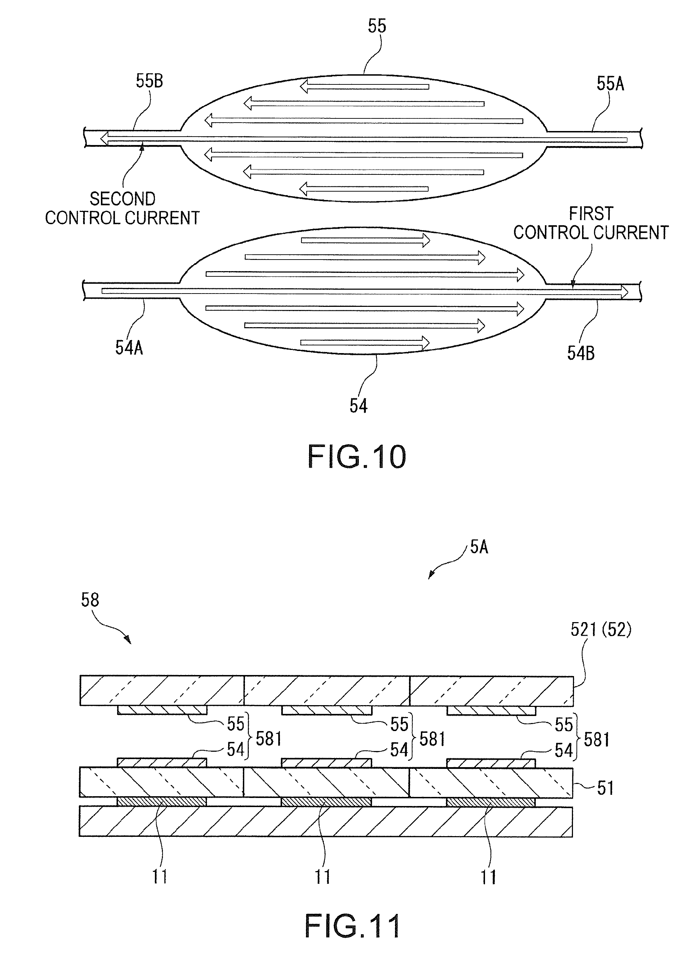

Fig. 10 is a diagram showing a schematic configuration of a stationary reflecting film and a movable reflecting film, and the control currents flowing through these reflecting films in a variable wavelength interference filter according to the second embodiment of the invention.

In the present embodiment, a conductive reflecting film such as a metal film or a metallic alloy film is used as the stationary reflecting film 54 and the movable reflecting film 55. Further, it is also possible to adopt a configuration of, for example, forming a conductive film having light permeability on a surface layer of the dielectric multilayer film.

Further, in the present embodiment, as shown in Fig. 10, a stationary extraction electrode 54A for input and a stationary extraction electrode 54B for output are connected to the stationary reflecting film 54, and the stationary extraction electrode 54A for input and the stationary extraction electrode 54B for output are connected respectively at positions of the outer peripheral edge of the stationary reflecting film 54, the positions being point symmetric about the filter center point O.

Further, a movable extraction electrode 55A for input and a movable extraction electrode 55B for output are connected to the movable reflecting film 55, and the movable extraction electrode 55A for input and the movable extraction electrode 55B for output are connected respectively at positions of the outer peripheral edge of the movable reflecting film 55, the positions being point symmetric about the filter center point O.

Further, these extraction electrodes 54A, 54B, 55A, and 55B are each connected to the tilt control section 152.

Further, also in the variable wavelength interference filter of the present embodiment, there is disposed the electrostatic actuator 56 as the gap changing section similarly to the first embodiment.

Further, as shown in Fig. 10, the tilt control section 152 makes the first control current flow from the stationary extraction electrode 54A for input toward the stationary extraction electrode 54B for output, and makes the second control current flow from the movable extraction electrode 55A for input toward the movable extraction electrode 55B for output. Thus, similarly to the first embodiment described above, the directions of the control currents respectively flowing through the stationary reflecting film 54 and the movable reflecting film 55 become opposite to each other in the filter plan view, and the repulsive force due to the Lorentz force occurs between the stationary reflecting film 54 and the movable reflecting film 55.

Further, also in the tilt control section 152 of the present embodiment, similarly to the first embodiment described above, when changing the gap dimension of the gap G1 using the electrostatic actuator 56, the tilt control section 152 continues to make the control currents flow during the period until the settling time when the vibration of the second substrate is settled. Thus, the reduction in settling time can be achieved.

Functions and Advantages of Second Embodiment

In the present embodiment, the tilt control section 152 makes the first control current flow through the stationary reflecting film 54, and makes the second control current, which has the opposite direction to the first control current in the filter plan view, flow through the movable reflecting film 55.

Therefore, the repulsive force due to the Lorentz force acts on the movable reflecting film 55, and the smaller the gap dimension of the gap G1 between the reflecting films 54, 55 is, the stronger the Lorentz force becomes. Therefore, similarly to the first embodiment, the tilt of the movable section 521 can be suppressed, and the degradation of the parallelism between the reflecting films 54, 55 can be suppressed.

Further, in the present embodiment, the Lorentz force acts directly on the movable reflecting film 55. Therefore, even in the case in which, for example, a central portion of the movable reflecting film 55 is deflected toward the stationary substrate 51 side in the area where the stationary reflecting film 54 and the movable reflecting film 55 are opposed to each other, it is possible for the Lorentz force to act so as to correct the deflection to thereby make the reflecting films 54, 55 parallel to each other. Therefore, the parallelism between the reflecting films 54, 55 can more surely be kept, and thus, the degradation of the resolution of the variable wavelength interference filter 5 can be suppressed.

Modified Example of Second Embodiment

In the second embodiment described above, there is described the configuration example in which the single stationary reflecting film 54 and the single movable reflecting film 55 are disposed. In contrast, the invention can also be applied to a configuration provided with a plurality of stationary reflecting films 54 and a plurality of movable reflecting films 55 opposed to the plurality of stationary reflecting films 54.

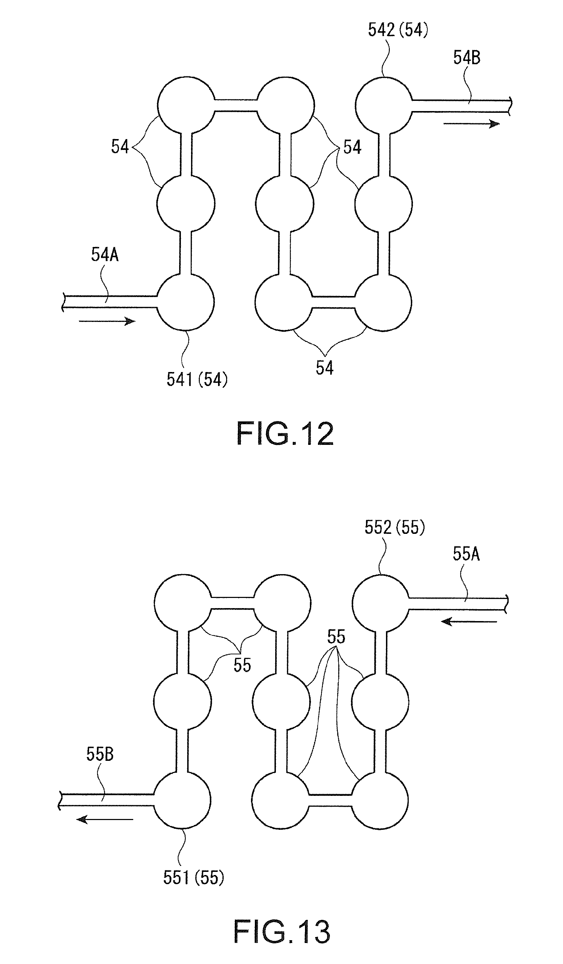

Fig. 11 is a cross-sectional view showing a schematic configuration of the variable wavelength interference filter 5A according to a modified example of the second embodiment. Fig. 12 is a diagram showing a connection configuration of the stationary reflecting film 54 of the variable wavelength interference filter 5A according to the modified example of the second embodiment. Fig. 13 is a diagram showing a connection configuration of the movable reflecting film 55 of the variable wavelength interference filter 5A according to the modified example of the second embodiment.

As shown in Fig. 11, in the variable wavelength interference filter 5A, the plurality of stationary reflecting films 54 and the plurality of movable reflecting films 55 are disposed inside an optical interference region 58. Further, a pair of stationary reflecting film 54 and movable reflecting film 55 constitute one light interference section 581, and the detectors 11 independent of each other are disposed corresponding respectively to the light interference sections 581. In such a variable wavelength interference filter 5A as described above, it becomes possible to make the detectors 11 receive the lights transmitted through the light interference sections 581, respectively.

Further, although not shown in the drawings, the electrostatic actuator 56 for changing the dimension of the gap G1 between the reflecting films 54, 55 is disposed outside the optical interference region 58 in the filter plan view.

Further, the plurality of stationary reflecting films 54 are connected in series to each other as shown in Fig. 12, and the stationary extraction electrode 54A for input is connected to the stationary reflecting film 541 connected at one end portion of the stationary reflecting films 54 connected in series to each other. Further, the stationary extraction electrode 54B for output is connected to the stationary reflecting film 542 connected at the other end portion of the stationary reflecting films 54 connected in series to each other.

Similarly, the plurality of movable reflecting films 55 are connected in series to each other as shown in Fig. 13, and the movable extraction electrode 55B for output is connected to the movable reflecting film 551 opposed to the stationary reflecting film 541 among the movable reflecting films 55 connected in series to each other. Further, the movable extraction electrode 55A for input is connected to the movable reflecting film 552 opposed to the stationary reflecting film 542 among the movable reflecting films 55 connected in series to each other.

Similarly to the second embodiment, these extraction electrodes 54A, 54B, 55A, and 55B are each connected to the tilt control section 152.

Further, similarly to the second embodiment, the tilt control section 152 makes the first control current flow from the stationary extraction electrode 54A for input toward the stationary extraction electrode 54B for output, and makes the second control current flow from the movable extraction electrode 55A for input toward the movable extraction electrode 55B for output.

In such a variable wavelength interference filter 5A as described above, it is possible to make the Lorentz force, which corresponds to the dimension of the gap G1 between the reflecting films 54, 55 in each of the light interference sections 581, act thereon. Therefore, it is possible to keep the dimensions of the gap G1 in the respective light interference sections 581 equal to each other, and thus it is possible to uniform the wavelengths of the lights to be transmitted through the respective light interference sections 581 with high accuracy.

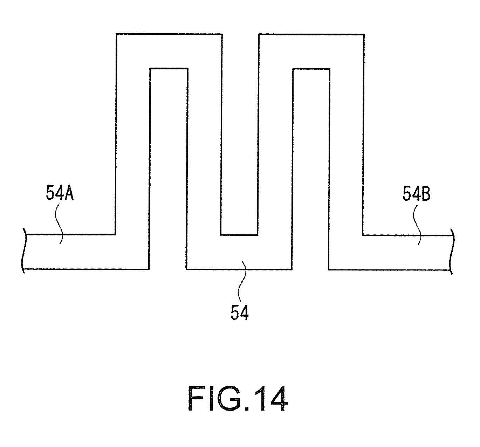

It should be noted that although in the example shown in Figs. 11 through 13, there is described the example of forming the reflecting films 54, 55 to have a circular shape, it is also possible to form the stationary reflecting films 54 and the electrodes for connecting the stationary reflecting films to each other so as to have the same width dimension as shown in, for example, Fig. 14. The same applies to the case of the movable reflecting films 55.

Further, it is also possible to adopt a configuration in which the electrostatic actuator 56 is disposed so as to correspond respectively to the light interference sections 581 in the example shown in Figs. 11 through 14, and the wavelengths of the lights to be transmitted through the respective light interference sections 581 can individually be set.

Also in this case, similarly to the second embodiment, the parallelism between the reflecting films 54, 55 can be kept with high accuracy in each of the light interference sections 581, and thus the resolution of each of the light interference sections 581 can be improved.

Third Embodiment

Then, a third embodiment of the invention will be explained with reference to the accompanying drawings.

In the first and second embodiments described above, the tilt control section 152 continues to make the control currents flow through the control electrodes 571, 572 (the reflecting films 54, 55 in the second embodiment) during the period until the vibration of the movable section 521 is settled to thereby achieve the reduction in settling time. In contrast, in the third embodiment, the tilt control section 152A makes the control currents flow through the control electrodes 571, 572 to thereby suppress the tilt of the movable section 521 using the repulsive force due to the Lorentz force, and at the same time, uses the repulsive force due to the Lorentz force as the driving power when performing feedback control.

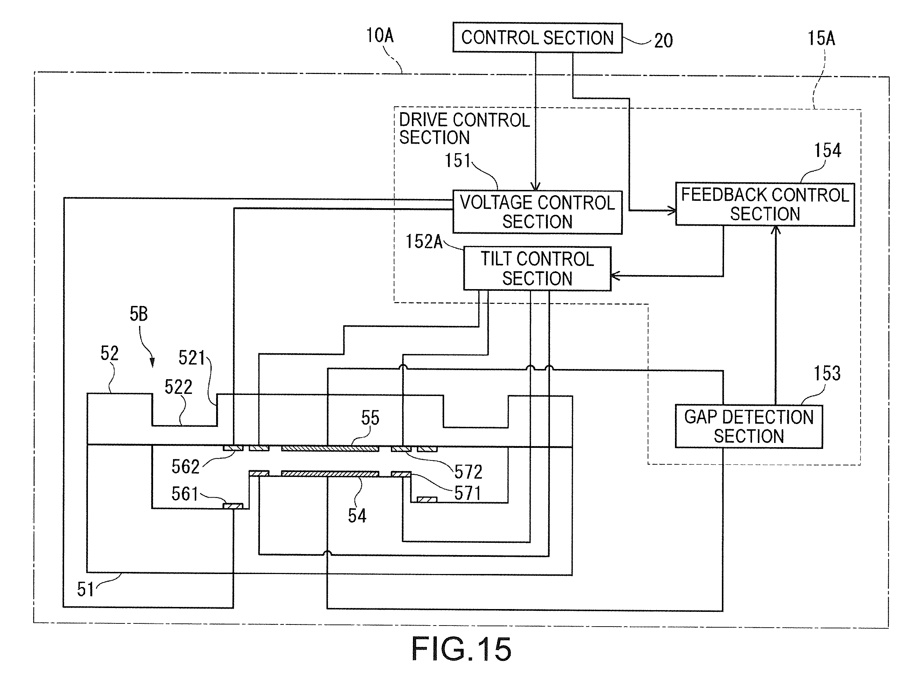

Fig. 15 is a diagram showing a schematic configuration of an optical module 10A according to the third embodiment.

In the variable wavelength interference filter 5B in the present embodiment, the reflecting films 54, 55 have electrical conductivity, and these reflecting films 54, 55 are made to function as capacitance detecting electrodes.

In other words, capacitance detecting extraction electrodes (not shown) are connected respectively to the reflecting films 54, 55, and thus, the reflecting films 54, 55 are connected to a gap detection section 153 of the drive control section 15A. Such a capacitance detecting extraction electrode for, for example, the stationary reflecting film 54 can be disposed between the first control electrode 571A1 for input and the first control electrode 571A2 for output shown in Fig. 4, and such a capacitance detecting extraction electrode for the movable reflecting film 55 can be disposed between the second control electrode 572A1 for input and the first control electrode 572A2 for output shown in Fig. 5.

It should be noted that although in the present embodiment, the reflecting films 54, 55 are made to function as the electrodes for detecting the capacitance, it is also possible to adopt a configuration of disposing the electrodes for detecting the capacitance separately on the stationary substrate 51 and the movable substrate 52 in the configuration of making the control currents flow through the reflecting films 54, 55 as in, for example, the second embodiment.

On the other hand, as shown in Fig. 15, the drive control section 15A constituting the optical module 10A is provided with the voltage control section 151, the tilt control section 152A, the gap detection section 153, and a feedback control section 154.

The gap detection section 153 detects the capacitance in the reflecting films 54, 55, and then outputs the detection signal to the feedback control section 154.

The feedback control section 154 outputs a feedback signal to the tilt control section 152A.

The tilt control section 152A makes the control currents flow through the control electrodes 571, 572 to thereby suppress the tilt of the movable section 521, and at the same time, increases or decreases the current values of the control currents based on the feedback signal.

In such a configuration as described above, the operation of the variable wavelength interference filter 5B is controlled as described below.

In the drive control section 15A, when the instruction signal is input from the control section 20, the voltage control section 151 applies the drive voltage corresponding to the instruction signal to the electrostatic actuator 56. It should be noted that in the present embodiment, the voltage control section 151 applies the drive voltage so that the dimension of the gap G1 becomes smaller than the dimension corresponding to the target wavelength.

On this occasion, the tilt control section 152A makes the control currents flow through the control electrodes 571, 572 to thereby suppress the tilt of the movable section 521 similarly to the first embodiment.

Meanwhile, the gap detection section 153 applies a high-frequency voltage for detecting the capacitance to the reflecting films 54, 55 to detect the capacitance held between the reflecting films 54, 55.

Further, the gap detection section 153 outputs the detection signal corresponding to the capacitance thus detected to the feedback control section 154.

When the detection signal is input, the feedback control section 154 calculates the deviation from the instruction signal input from the control section 20, and then outputs the feedback signal corresponding to the deviation to the tilt control section 152A.

When the feedback signal is input from the feedback control section 154, the tilt control section 152A increases or decreases the current value of at least one of the first control current to be made to flow through the first control electrode 571 and the second control current to be made to flow through the second control electrode 572 based on the feedback signal to thereby increase or decrease the strength of the Lorentz force (the repulsive force) to be made to act on the second control electrode 572.

Such feedback control as described above is performed until the deviation calculated in the feedback control section 154 vanishes (or becomes equal to or lower than a predetermined threshold value) to thereby set the gap dimension of the gap G1 to the dimension corresponding to the target wavelength.

Functions and Advantages of Third Embodiment

In the present embodiment, the tilt control section 152A increases or decreases the control currents to be made to flow respectively through the control electrodes 571, 572 in accordance with the feedback signal. Thus, while suppressing the tilt of the movable section 521 with the repulsive force due to the Lorentz force, by varying the strength of the Lorentz force, the dimension control of the gap G1 can be performed.

Here, the Lorentz force is proportional to the -1th power of the gap dimension d of the gap G3 between the control electrodes 571, 572 as shown in Formula 1 described above. On the other hand, the electrostatic attractive force acting on the electrostatic actuator 56 is proportional to the -2th power of the gap dimension of the gap G2 between the drive electrodes 561, 562. Therefore, the control of the Lorentz force is lower in sensitivity compared to the control of the electrostatic attractive force, and therefore the control with high accuracy becomes possible even in the case in which the gap G3 is small.

Thus, the light with the target wavelength can accurately be transmitted from the variable wavelength interference filter 5B. Further, similarly to the first embodiment described above, by making the Lorentz force counteracting the electrostatic attractive force act thereon, the vibration of the movable section 521 can be suppressed, the reduction in settling time can also be achieved, and the tilt of the movable section 521 can be suppressed. Therefore, the light with high resolution (with small half-value width) can be transmitted.

Other Embodiments

It should be noted that the invention is not limited to the embodiments described above, but includes modifications, improvements, and so on within a range where the advantages of the invention can be achieved.

For example, although in the first embodiment, the example of configuring the control electrodes 571, 572 each having the roughly C-shaped circular arc shape is described, the invention is not limited to this example.

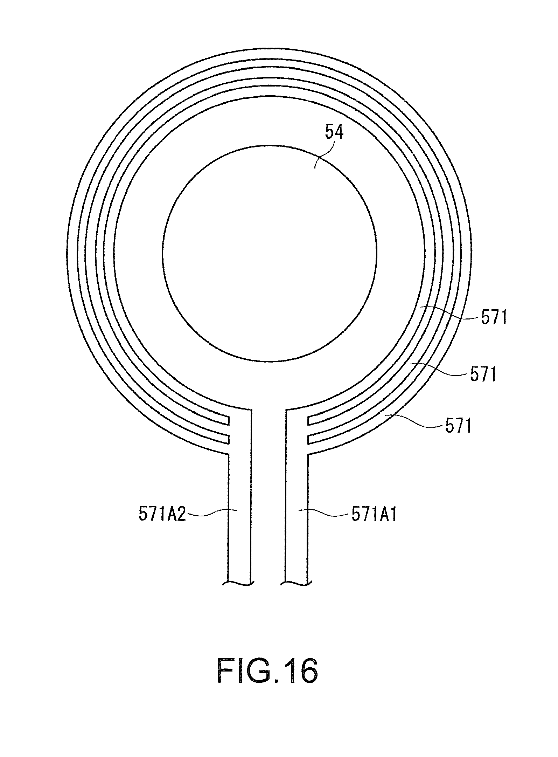

Figs. 16, 17, and 18 are diagrams showing other shape examples of the first control electrode 571. It should be noted that since the same applies to the second control electrode 572, the second control electrode 572 will be omitted from the drawings here.

It is also possible to adopt a configuration in which a plurality of first control electrodes 571 are disposed, and end portions of each of the first control electrodes 571 are respectively provided with the first control extraction electrodes 571A1, 571A2. Fig. 16 shows an example of using the common first control extraction electrodes 571A1, 571A2 to the plurality of first control electrodes 571. In this case, if the electrical resistances of the respective first control electrodes 571 are the same, the first control currents with the same current value flow therethrough. It should be noted that it is also possible to adopt a configuration of providing the first control extraction electrodes 571A1, 571A2 independently to each of the first control electrodes 571. In this case, it is also possible to make the first control currents different from each other flow through the respective first control electrodes 571.

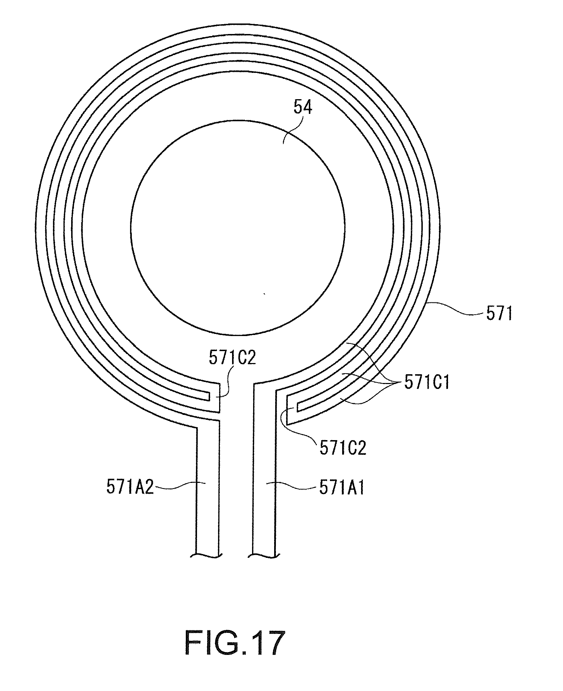

In the example shown in Fig. 17, the first control electrode 571 is composed of a plurality of circular arc sections 571C1 and connection sections 571C2 for connecting these circular arc sections 571C1 to each other.

In such electrode patterns as shown in Figs. 16 and 17 described above, since the area for generating the repulsive force due to the Lorentz force increases, the tilt of the movable section 521 can be suppressed with a stronger repulsive force.

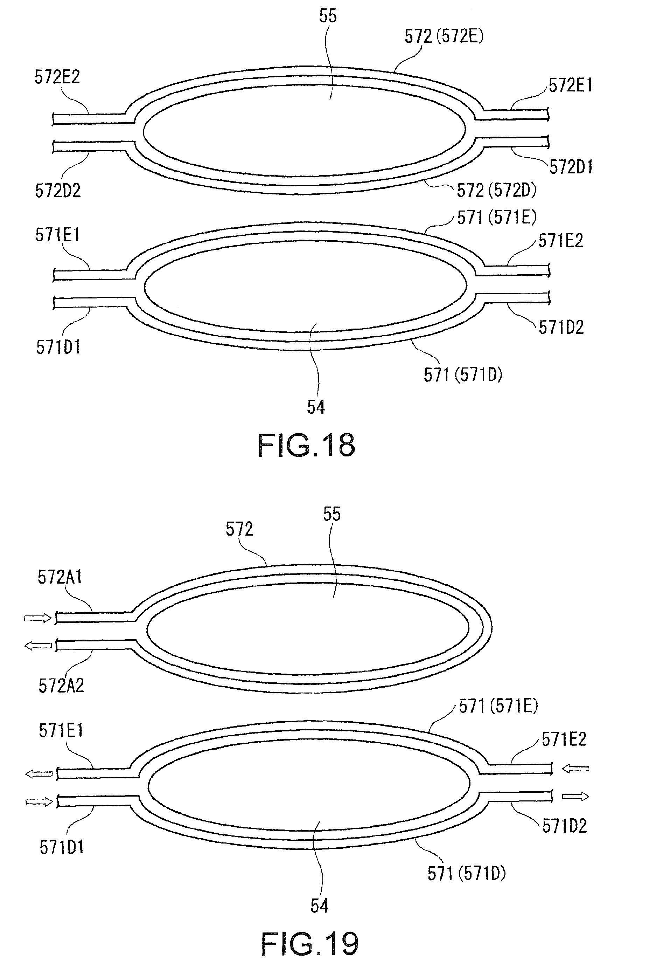

Further, it is also possible to adopt a configuration of dividing the first control electrode 571 into two or more electrodes as shown in Fig. 18. Fig. 18 shows an example in which the first control electrode 571 is divided into the two first control electrodes 571D, 571E, and the second control electrode 572 to be opposed to these first control electrodes 571D, 571E is similarly divided into two second control electrodes 572D, 572E.

In the example shown in Fig. 18, the tilt control section 152 makes the first control current flow through the first control electrode 571D in the direction from the first control extraction electrode 571D1 toward the first control extraction electrode 571D2, and makes a current, which has the same amount as that of the first control current with respect to the first control electrode 571D, flow through the first control electrode 571E as the first control current in the direction from the first control extraction electrode 571E1 toward the first control extraction electrode 571E2. Further, the tilt control section 152 makes the second control current flow through the second control electrode 572D in the direction from the second control extraction electrode 572D1 toward the second control extraction electrode 572D2, and makes a current, which has the same amount as that of the second control current with respect to the second control electrode 572D, flow through the second control electrode 572E as the second control current in the direction from the second control extraction electrode 572E1 toward the second control extraction electrode 572E2.

It should be noted that it is also possible for the tilt control section 152 to make the first control current flow through the first control electrode 571D in the direction from the first control extraction electrode 571D1 toward the first control extraction electrode 571D2, and make the first control current flow through the first control electrode 571E in the direction from the first control extraction electrode 571E2 toward the first control extraction electrode 571E1. In this case, the tilt control section 152 makes the second control current flow through the second control electrode 572D in the direction from the second control extraction electrode 572D1 toward the second control extraction electrode 572D2, and makes the second control current flow through the second control electrode 572E in the direction from the second control extraction electrode 572E2 toward the second control extraction electrode 572E1.

It should be noted that although there is described the example of making the first control currents having the same current value flow respectively through the first control electrode 571D and the first control electrode 571E, it is also possible to set the current values of these first control currents to respective values different from each other in accordance with, for example, the tilt amount of the movable section 521. The same applies to the second control currents with respect to the second control electrodes 572D, 572E.

Further, although in the examples shown in Figs. 16 and 18, it is assumed that the second control electrode 572 is formed to have the same shape as that of the first control electrode 571, the invention is not limited to these examples. For example, it is also possible for the second control electrode 572 to be formed of one electrode including areas respectively opposed to the first control electrodes 571D, 571E as shown in Fig. 19. In this case, the control currents are made to flow so as to generate the repulsive force due to the Lorentz force between the control electrodes 571D, 572, and between the control electrodes 571E, 572. For example, in the example shown in Fig. 19, the tilt control section 152 makes the first control current flow through the first control electrode 571D in the direction from the first control extraction electrode 571D1 toward the first control extraction electrode 571D2, and makes the first control current flow through the first control electrode 571E in the direction from the first control extraction electrode 571E2 toward the first control extraction electrode 571E1. Further, the tilt control section 152 makes the second control current flow from the second control extraction electrode 572A1 of the second control electrode 572 toward the second control extraction electrode 572A2.

Although in each of the embodiments described above, the configuration in which the movable reflecting film 55 is disposed on the movable substrate 52 as the second substrate is described as an example, the invention is not limited to this example. For example, in the first embodiment, it is also possible to adopt a configuration in which the movable reflecting film as a second reflecting film is disposed so as to block the grooves (e.g., the electrode arrangement groove 511 and the reflecting film installation section 512) of the stationary substrate 51, and the second control electrode 572 and the second drive electrode 562 are disposed on the movable reflecting film via an insulating layer.

In this case, after providing the first drive electrode 561, the first control electrode 571, and the stationary reflecting film 54 to the stationary substrate 51, a sacrifice layer, with which the groove sections such as the electrode arrangement groove 511 and the reflecting film installation section 512 are filled, is formed. Then, the second drive electrode 562 and the second control electrode 572 are deposited on the sacrifice layer, the second reflecting film is further deposited on the sacrifice layer and the first bonding section 513 of the stationary substrate 51, and then the sacrifice layer is removed. Further, in the case of making the control currents flow through the reflecting films as in the case of the second embodiment, it is not required to form the control electrodes 571, 572.

Further, although in each of the embodiments described above, the electrostatic actuator 56 is described as an example of the gap changing section, and the configuration of changing the dimension of the gap G1 between the stationary reflecting film 54 and the movable reflecting film 55 using the electrostatic actuator 56 is described as an example, the invention is not limited to the examples.

For example, it is also possible to adopt a configuration of using a dielectric actuator formed of a first induction coil provided to the stationary substrate 51, and a second induction coil or a permanent magnet provided to the movable substrate 52 as the gap changing section.

Further, it is also possible to adopt a configuration of using a piezoelectric actuator instead of the electrostatic actuator 56. In this case, for example, a lower electrode layer, a piezoelectric film, and an upper electrode layer are disposed on the holding section 522 in a stacked manner, and the voltage applied between the lower electrode layer and the upper electrode layer is varied as an input value, and thus the piezoelectric film is expanded or contracted to thereby make it possible to deflect the holding section 522.

Further, the invention is not limited to the configuration of changing the size of the inter-reflecting film gap G1 due to application of a voltage, but a configuration of controlling the size of the inter-reflecting film gap G1 by, for example, changing the pressure of the air between the stationary substrate 51 and the movable substrate 52 can also be cited as an example.

Further, the invention can also be applied to a fixed wavelength Fabry-Perot etalon to which no gap changing section is provided.

In a fixed wavelength interference filter, such a movable section 521 and a holding section 522 as described in the embodiments described above are not provided, and the distance (the gap G1 between the reflecting films 54, 55) between the first substrate (the stationary substrate 51) and the second substrate (the movable substrate 52) is kept constant. However, even in such a fixed wavelength interference filter as described above, it is possible that the parallelism between the reflecting films 54, 55 is degraded due to the factors such as manufacturing error when forming the substrate, or unevenness of the thickness of the bonding film when bonding the first substrate and the second substrate to each other.

To cope with the above, also in such an interference filter as described above, similarly to the first embodiment described above, the first control electrode 571 is disposed on the first substrate, the second control electrode 572 is disposed on the second substrate, and then the control currents having respective directions opposite to each other in the filter plan view are made to flow respectively through the control electrodes 571, 572. Further, it is also possible to adopt a configuration of making the control currents flow respectively through the reflecting films 54, 55 similarly to the second embodiment.

Thus, the parallelism between the reflecting films can be improved also in the fixed wavelength interference filter, and the resolution of the interference filter can be improved.

Although the example of setting the thickness dimension of the control electrodes 571, 572 to be larger than the thickness dimension of the reflecting films 54, 55 to thereby make the gap G3 smaller than the gap G1 is described in the first embodiment described above, the invention is not limited to this example. It is also possible to adopt a configuration of, for example, increasing the thickness dimension of at least either one of the insulating films 571B, 572B on the respective control electrodes 571, 572 to thereby set the gap G3 to be smaller than the gap G1.

Further, it is also possible to dispose a protruding section at an arrangement position of at least either one of the control electrodes 571, 572. Such a protruding section can be formed when processing, for example, the stationary substrate 51 and the movable substrate 52 by etching, or can be formed by additionally disposing a film member on the stationary substrate 51 or the movable substrate 52.

Further, although the configuration of disposing the insulating film 571B on the first control electrode 571, and disposing the insulating film 572B on the second control electrode 572 is described as an example, it is also possible to adopt a configuration in which the insulating film is provided to only either one of the first control electrode 571 and the second control electrode 572.

Although in the first and second embodiments described above, there is described the example of making the control currents continuously flow through the control electrodes 571, 572 (the reflecting films 54, 55 in the second embodiment) during the period of the settling time until the vibration of the movable section 521 is settled, the invention is not limited to this example. It is also possible for the tilt control section 152 to, for example, perform a process of making the control currents flow to generate the repulsive force when the movable section 521 is displaced toward the stationary substrate 51, and stopping the control currents when the movable section 521 is displaced in the direction of getting away from the stationary substrate 51. Although it is possible to increase the amplitude if the repulsive force acts thereon when the movable section 521 moves in the direction of getting away from the stationary substrate 51, by stopping the control currents as described above, the increase in the amplitude due to the repulsive force can be suppressed. Further, it is also possible to generate the attractive force by making either one of the first control current and the second control current flow in the opposite direction when the movable section 521 is displaced toward the stationary substrate 51. On this occasion, since it is possible to make the Lorentz force act in the direction of settling the vibration when the movable section 521 is displaced in the direction of getting away from the stationary substrate 51, it is possible to accelerate the settling of the vibration.

Even in such a case, by making the control currents for generating the repulsive force flow through the control electrodes 571, 572 immediately before the vibration is settled, the parallelism between the reflecting films 54, 55 can be improved when performing the light intensity detection using the detector 11, and thus, the light intensity detection with high accuracy can be performed.

Although the example in which the plurality of stationary reflecting films 54 are connected in series to each other, and the movable reflecting films 55 opposed to the stationary reflecting films 54 are also connected in series to each other is described as the modified example of the second embodiment, the invention is not limited to this example.

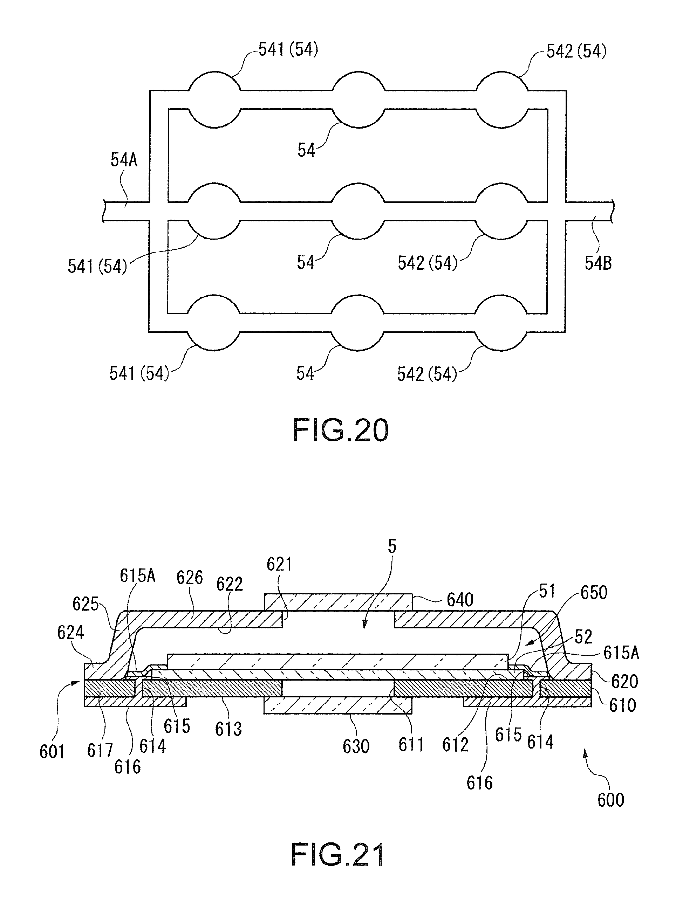

It is also possible to adopt a configuration in which, for example, a plurality of stationary reflecting films 54 are connected in parallel to each other, and a plurality of movable reflecting films 55 opposed to the stationary reflecting films 54 are also connected in parallel to each other as shown in Fig. 20.

Further, although in the second embodiment, the configuration of disposing the stationary reflecting film 54 as the first reflecting film on the stationary substrate 51 as the first substrate, and disposing the movable reflecting film 55 as the second reflecting film on the movable substrate 52 as the second substrate is described as an example, the invention is not limited to this configuration. For example, a configuration not provided with at least either one of the first substrate and the second substrate can also be adopted. In this case, for example, after disposing the first reflecting film on one surface of a parallel glass substrate, and disposing the second reflecting film on the other surface parallel to the one surface, the parallel glass substrate is etched using an etching process or the like. In the present configuration, the first substrate and the second substrate are eliminated, and thus, a thinner spectroscopic element can be obtained. Further, in this case, by making, for example, a spacer intervene between the first reflecting film and the second reflecting film, the gap dimension between the reflecting films can be maintained. Further, by disposing the first electrode on the first reflecting film, disposing the second electrode on the second reflecting film, and applying the drive voltage between the first electrode and the second electrode, the gap dimension between the reflecting films can be changed.

Even in such a configuration as described above, by making the first control current flow through the first reflecting film, and making the second control current flow through the second reflecting film, it is possible to make the repulsive force act between the first reflecting film and the second reflecting film due to the Lorentz force. Therefore, even in the configuration of not provided with the first substrate and the second substrate, the deflection of the first reflecting film and the second reflecting film can be suppressed, and it is possible to keep the gap dimension between the reflecting films even (suppress the degradation of parallelism).

Further, in the first embodiment, there is described the example of making the control currents flow respectively through the first control electrode 571 and the second control electrode 572, and in the second embodiment, there is described the example of making the control currents flow respectively through the stationary reflecting film 54 and the movable reflecting film 55. In contrast, it is also possible to adopt a configuration of making the first control current flow through the first control electrode 571 and the stationary reflecting film 54, and making the second control current flow through the second control electrode 572 and the movable reflecting film 55. In this case, a stronger repulsive force can be generated.

Further, in each of the embodiments described above, there is adopted the configuration in which the variable wavelength interference filter 5, 5A, 5B is directly provided to the optical module 10, 10A. However, some optical modules have a complicated configuration, and there are some cases in which it is difficult to directly provide the variable wavelength interference filter 5, 5A, 5B in particular to a small-sized optical module. In contrast, it is also possible to adopt a configuration in which the variable wavelength interference filter 5, 5A, 5B is housed in a housing, and is then installed in the optical module or the like.

Fig. 21 is a cross-sectional view showing a schematic configuration of the optical filter device according to another embodiment of the invention.

As shown in Fig. 21, the optical filter device 600 is provided with the variable wavelength interference filter 5, and a housing 601 for housing the variable wavelength interference filter 5. It should be noted that although in the present embodiment there is exemplified the variable wavelength interference filter 5 as an example, it is also possible to adopt a configuration in which one of the variable wavelength interference filter 5A according to the second embodiment and the variable wavelength interference filter 5B according to the third embodiment is used.

The housing 601 is provided with a base substrate 610, a lid 620, a base-side glass substrate 630, and a lid-side glass substrate 640.

The base substrate 610 is formed of, for example, a single layer ceramic substrate. The movable substrate 52 of the variable wavelength interference filter 5 is installed to the base substrate 610. As a method of installing the movable substrate 52 to the base substrate 610, it is possible to adopt a method of disposing it via, for example, an adhesive, or a method of disposing it by fitting it to, for example, another fixation member. Further, the base substrate 610 is provided with a light passage hole 611 opening in an area opposed to the optical interference region (the region where the reflecting films 54, 55 are opposed to each other). Further, the base-side glass substrate 630 is bonded so as to cover the light passage hole 611. As the bonding method of the base-side glass substrate 630, for example, glass frit bonding using a glass frit, which is a scrap of glass obtained by melting a glass material at high temperature and then rapidly cooling it, and bonding with epoxy resin or the like can be used.

The base inner surface 612 of the base substrate 610, which is opposed to the lid 620, is provided with inner terminal sections 615 corresponding respectively to the extraction electrodes 562A, 572A1, and 572A2 and the connection electrodes 563, 573A, and 573B of the variable wavelength interference filter 5. It should be noted that the connection between the extraction electrodes 562A, 572A1, and 572A2, and the connection electrodes 563, 573A, and 573B and the respective inner terminal sections 615 can be achieved using, for example, FPC 615A, and bonding therebetween is achieved using, for example, Ag paste, an anisotropic conductive film (ACF), and anisotropic conductive paste (ACP). It should be noted that the Ag paste emitting little outgas is preferably used in the case of keeping the internal space 650 in the vacuum state. Further, wiring connection with, for example, wire bonding can also be performed besides the connection using the FPC 615A.

Further, the base substrate 610 is provided with through holes 614 formed so as to correspond to the positions where the respective inner terminal sections 615 are disposed, and the inner terminal sections 615 are connected to outer terminal sections 616 disposed on a base outer surface 613 of the base substrate 610 on the opposite side to the base inner surface 612 via electrically conductive members with which the through holes 614 are filled, respectively.

Further, the outer peripheral portion of the base substrate 610 is provided with a base bonding section 617 to be bonded to the lid 620.

As shown in Fig. 21, the lid 620 is provided with a lid bonding section 624 to be bonded to the base bonding section 617 of the base substrate 610, a sidewall section 625 continuing from the lid bonding section 624 and rising in the direction of departing from the base substrate 610, and a top surface section 626 continuing from the sidewall section 625 and covering the stationary substrate 51 side of the variable wavelength interference filter 5. The lid 620 can be formed of an alloy such as kovar, or metal.

The lid 620 is adhesively bonded to the base substrate 610 by the lid bonding section 624 and the base bonding section 617 of the base substrate 610 bonded to each other.

As the bonding method, there can be cited, for example, soldering with brazing silver or the like, sealing with a eutectic alloy layer, welding with low-melting-point glass, glass adhesion, glass frit bonding, and adhesion with epoxy resin, besides laser welding. These bonding methods can arbitrarily be selected in accordance with the materials of the base substrate 610 and the lid 620, the bonding environment, and so on.

The top surface section 626 of the lid 620 is set to be parallel to the base substrate 610. The top surface section 626 is provided with a light passage hole 621 formed in an area opposed to the optical interference region of the variable wavelength interference filter 5. Further, the lid-side glass substrate 640 is bonded so as to cover the light passage hole 621. As the bonding method of the lid-side glass substrate 640, the glass frit bonding, adhesion with epoxy resin, and so on can be used similarly to the bonding of the base-side glass substrate 630.

In such an optical filter device 600, since the variable wavelength interference filter 5 is protected by the housing 601, the characteristic change of the variable wavelength interference filter 5 due to foreign matters, gases and so on included in the atmosphere can be prevented, and further, breakage of the variable wavelength interference filter 5 due to external factors can be prevented. Further, since invasion of charged particles can be prevented, charging of the electrodes 561, 562 can be prevented. Therefore, generation of a coulomb force due to charging can be suppressed, and thus, parallelism between the reflecting films 54, 55 can more surely be maintained.

Further, in the case of, for example, carrying the variable wavelength interference filter 5 manufactured in a factory to an assembly line for assembling the optical modules or the electronic apparatuses, it becomes possible to safely carry the variable wavelength interference filter 5 protected by the optical filter device 600.

Further, since the optical filter device 600 is provided with outer terminal sections 616 exposed on the outer peripheral surface of the housing 601, it becomes possible to easily provide wiring when installing it to the optical module or the electronic apparatus.

Further, although the spectroscopic measurement device 1 is cited in each of the embodiments described above as an example of the electronic apparatus according to the invention, the optical module and the electronic apparatus according to the invention can be applied in a variety of fields besides the above.

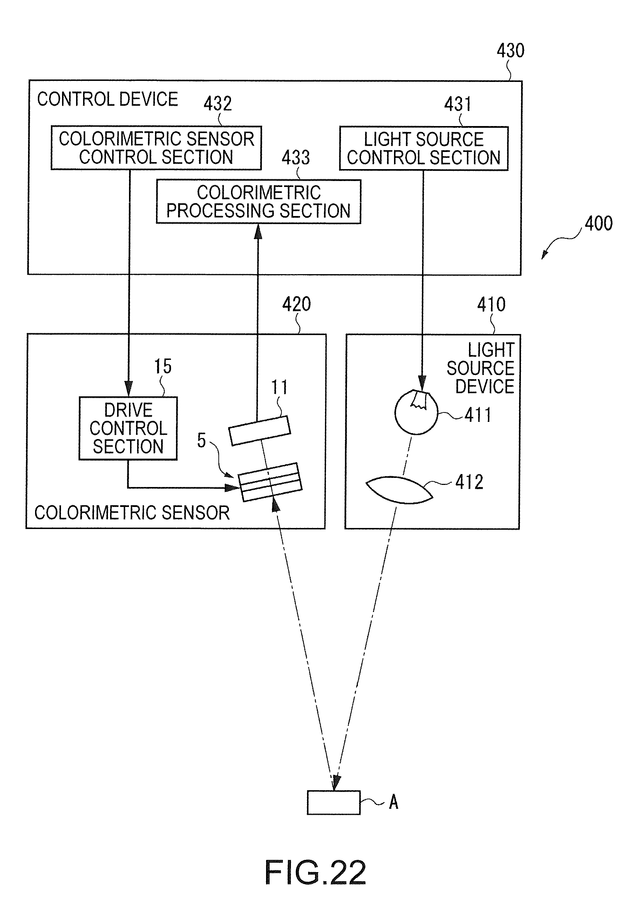

For example, as shown in Fig. 22, it is also possible to apply the electronic apparatus according to the invention to a colorimetric device for measuring colors.

Fig. 22 is a block diagram showing an example of the colorimetric device 400 equipped with the variable wavelength interference filter.

As shown in Fig. 22, the colorimetric device 400 is provided with a light source device 410 for emitting light to a test object A, a colorimetric sensor 420 (an optical module), and a control device 430 for controlling an overall operation of the colorimetric device 400. Further, the colorimetric device 400 is a device for making the light, which is emitted from the light source device 410, be reflected by the test object A, receiving the test target light thus reflected using the colorimetric sensor 420, and analyzing and then measuring the chromaticity of the test target light, namely the color of the test object A, based on the detection signal output from the colorimetric sensor 420.

The light source device 410 is provided with a light source 411 and a plurality of lenses 412 (one of the lenses is shown alone in Fig. 22), and emits, for example, reference light (e.g., white light) to the test object A. Further, it is possible for the plurality of lenses 412 to include a collimator lens, and in this case, the light source device 410 converts the reference light emitted from the light source 411 into parallel light with the collimator lens, and then emits it from the projection lens not shown toward the test object A. It should be noted that although in the present embodiment the colorimetric device 400 provided with the light source device 410 is described as an example, in the case in which, for example, the test object A is a light emitting member such as a liquid crystal panel, it is also possible to adopt a configuration not provided with the light source device 410.

The colorimetric sensor 420 is the optical module according to the invention, and is provided with the variable wavelength interference filter 5, the detector 11 for receiving the light transmitted through the variable wavelength interference filter 5, and the drive control section 15 for varying the wavelength of the light to be transmitted through the variable wavelength interference filter 5 as shown in Fig. 22. Further, the colorimetric sensor 420 is provided with an entrance optical lens not shown disposed at a position opposed to the variable wavelength interference filter 5, the entrance optical lens guiding the reflected light (the test target light), which has been reflected by the test object A, into the inside thereof. Further, the colorimetric sensor 420 disperses the light with a predetermined wavelength out of the test target light input from the entrance optical lens using the variable wavelength interference filter 5, and then receives the light thus dispersed using the detector 11. It should be noted that it is also possible to adopt a configuration in which any one of the variable wavelength interference filters 5A, 5B, and the optical filter device 600 described above is disposed instead of the variable wavelength interference filter 5. Further, in the case of using the variable wavelength interference filter 5B, such a drive control section 15A as described in the third embodiment can also be used instead of the drive control section 15.

The control device 430 controls an overall operation of the colorimetric device 400.

As the control device 430, a general-purpose personal computer, a handheld terminal, a colorimetry-dedicated computer, and so on can be used. Further, as shown in Fig. 22, the control device 430 is configured including a light source control section 431, a colorimetric sensor control section 432, a colorimetric processing section 433, and so on.

The light source control section 431 is connected to the light source device 410, and outputs a predetermined control signal to the light source device 410 based on, for example, a setting input by the user to thereby make the light source device 410 emit white light with a predetermined brightness.

The colorimetric sensor control section 432 is connected to the colorimetric sensor 420, and sets the wavelength of the light to be received by the colorimetric sensor 420 based on, for example, the setting input by the user, and then outputs the control signal instructing to detect the intensity of the received light with the present wavelength to the colorimetric sensor 420. Thus, the drive control section 15 of the colorimetric sensor 420 applies the voltage to the electrostatic actuator 56 based on the control signal to thereby drive the variable wavelength interference filter 5.

The colorimetric processing section 433 analyzes the chromaticity of the test object A based on the received light intensity detected by the detector 11.

Further, as another example of the electronic apparatus according to the invention, there can be cited an optical-base system for detecting presence of a specific material. As an example of such a system, there can be cited, for example, an in-car gas leak detector adopting a spectroscopic measurement method using the optical module according to the invention and detecting a specific gas with high sensitivity, and a gas detection device such as an optoacoustic noble-gas detector for a breath test.

An example of such a gas detection device will hereinafter be explained with reference to the accompanying drawings.

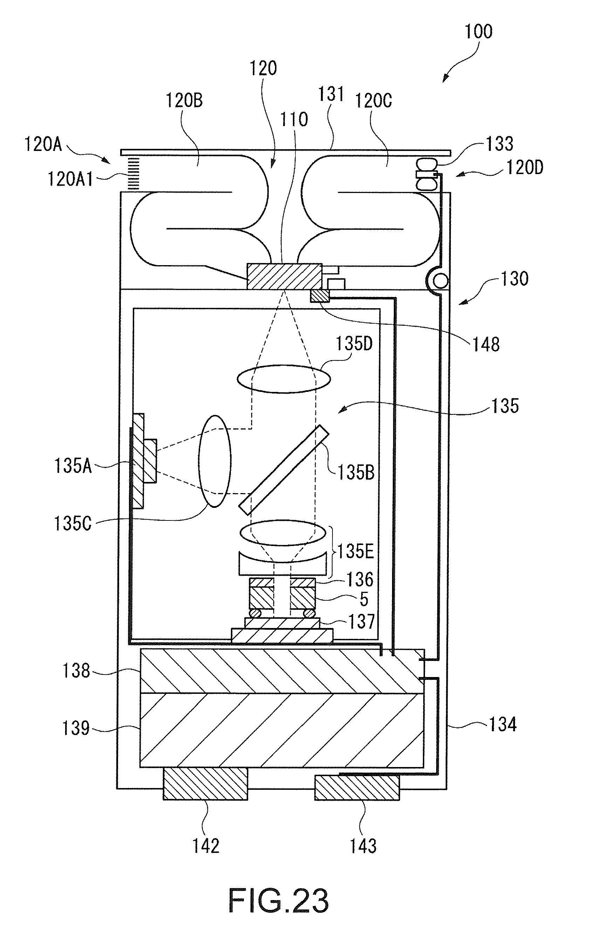

Fig. 23 is a schematic diagram showing an example of a gas detection device equipped with the optical module according to the invention.

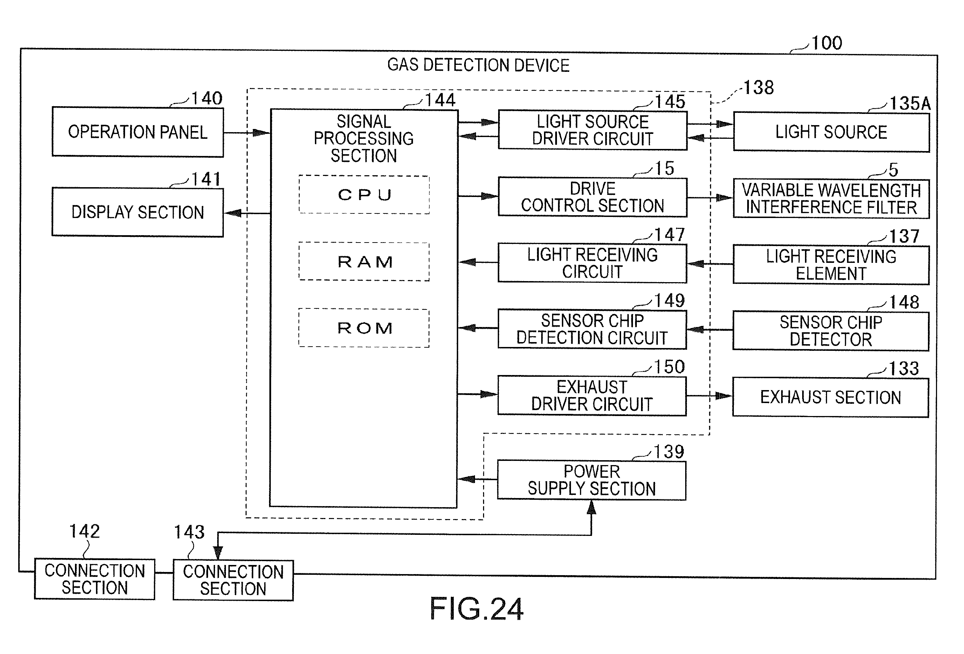

Fig. 24 is a block diagram showing a configuration of a control system of the gas detection device shown in Fig. 23.

As shown in Fig. 23, the gas detection device 100 is configured including a sensor chip 110, a channel 120 provided with a suction port 120A, a suction channel 120B, an exhaust channel 120C, and an exhaust port 120D, and a main body section 130.

The main body section 130 includes a detection device (the optical module) including a sensor section cover 131 having an opening to which the channel 120 is detachably attached, an exhaust unit 133, a housing 134, an optical section 135, a filter 136, the variable wavelength interference filter 5, a light receiving element 137 (the detector), and so on, a control section 138 (a processing section) for processing the signal thus detected and controlling the detector, a power supply section 139 for supplying electrical power, and so on. It should be noted that it is also possible to adopt a configuration in which any one of the variable wavelength interference filters 5A, 5B, and the optical filter device 600 described above is disposed instead of the variable wavelength interference filter 5. Further, the optical section 135 includes a light source 135A for emitting light, a beam splitter 135B for reflecting the light, which is input from the light source 135A, toward the sensor chip 110, and transmitting the light, which is input from the sensor chip side, toward the light receiving element 137, and lenses 135C, 135D, and 135E.

Further, as shown in Fig. 24, on the surface of the gas detection device 100, there are disposed an operation panel 140, a display section 141, a connection section 142 for an interface with an external device, and the power supply section 139. In the case in which the power supply section 139 is a secondary cell, a connection section 143 for the battery charge can also be provided.

Further, as shown in Fig. 24, the control section 138 of the gas detection device 100 is provided with a signal processing section 144 formed of a CPU and so on, a light source driver circuit 145 for controlling the light source 135A, the drive control section 15 for controlling the variable wavelength interference filter 5, a light receiving circuit 147 for receiving the signal from the light receiving element 137, a sensor chip detection circuit 149 for receiving a signal from a sensor chip detector 148 for reading a code of the sensor chip 110 to thereby detect presence or absence of the sensor chip 110, an exhaust driver circuit 150 for controlling the exhaust unit 133, and so on. It should be noted that in the case of using the variable wavelength interference filter 5B, such a drive control section 15A as described in the third embodiment can also be used instead of the drive control section 15.

Then, an operation of such a gas detection device 100 as described above will hereinafter be explained.

The sensor chip detector 148 is disposed inside the sensor section cover 131 in the upper part of the main body section 130, and the sensor chip detector 148 detects the presence or absence of the sensor chip 110. When detecting the detection signal from the sensor chip detector 148, the signal processing section 144 determines that it is the condition in which the sensor chip 110 is attached, and outputs a display signal for displaying the fact that the detection operation can be performed to the display section 141.

Then, in the case in which, for example, the user operates the operation panel 140, and the operation panel 140 outputs an instruction signal indicating that the detection process will be started to the signal processing section 144, the signal processing section 144 firstly outputs the signal for operating the light source to the light source driver circuit 145 to thereby operate the light source 135A. When the light source 135A is driven, the light source 135A emits a stable laser beam, which has a single wavelength and is a linearly polarized light. Further, the light source 135A incorporates a temperature sensor and a light intensity sensor, and the information of the sensors is output to the signal processing section 144. Then, in the case in which the signal processing section 144 determines that the light source 135A is operating stably based on the information of the temperature and the light intensity input from the light source 135A, the signal processing section 144 controls the exhaust driver circuit 150 to operate the exhaust unit 133. Thus, the gaseous sample including the target material (the gas molecule) to be detected is guided from the suction port 120A to the suction channel 120B, the inside of the sensor chip 110, the exhaust channel 120C, and the exhaust port 120D. It should be noted that the suction port 120A is provided with a dust filter 120A1, and relatively large dust, some water vapor, and so on are removed.

Further, the sensor chip 110 is a sensor incorporating a plurality of sets of metal nano-structures, and using localized surface plasmon resonance. In such a sensor chip 110, an enhanced electric field is formed between the metal nano-structures due to the laser beam, and when the gas molecules enter the enhanced electric field, the Raman scattered light including the information of the molecular vibration, and the Rayleigh scattered light are generated.

The Rayleigh scattered light and the Raman scattered light pass through the optical section 135 and then enter the filter 136, and the Rayleigh scattered light is separated out by the filter 136, and the Raman scattered light enters the variable wavelength interference filter 5. Then, the signal processing section 144 outputs a control signal to the drive control section 15. Thus, the drive control section 15 drives the electrostatic actuator 56 of the variable wavelength interference filter 5 in a similar manner to the first embodiment described above to make the variable wavelength interference filter 5 disperse the Raman scattered light corresponding to the gas molecules to be the detection target. Subsequently, when the light thus dispersed is received by the light receiving element 137, the light reception signal corresponding to the received light intensity is output to the signal processing section 144 via the light receiving circuit 147. On this occasion, the Raman scattered light to be the target can accurately be taken out from the variable wavelength interference filter 5.

The signal processing section 144 compares the spectrum data of the Raman scattered light corresponding to the gas molecule to be the detection target obtained in such a manner as described above and the data stored in the ROM with each other to thereby determine whether or not the gas molecule is the target one, and thus the substance is identified. Further, the signal processing section 144 makes the display section 141 display the result information, or outputs the result information from the connection section 142 to the outside.

It should be noted that although in Figs. 23 and 24 there is exemplified the gas detection device 100 for dispersing the Raman scattered light with the variable wavelength interference filter 5, and performing the gas detection based on the Raman scattered light thus dispersed, a gas detection device for identifying the gas type by detecting the absorbance unique to the gas can also be used. In this case, the gas sensor, which makes the gas flow into the sensor, and detects the light absorbed by the gas out of the incident light, is used as the optical module according to the invention. Further, the gas detection device for analyzing and determining the gas flowing into the sensor using such a gas sensor is cited as the electronic apparatus according to the invention. According also to such a configuration, it is possible to detect the component of the gas using the variable wavelength interference filter.

Further, as the system for detecting the presence of the specific substance, besides the gas detection described above, there can be cited a substance component analysis device such as a non-invasive measurement device of a sugar group using near-infrared dispersion, and a non-invasive measurement device of information of food, biological object, or mineral.

Hereinafter, a food analysis device will be explained as an example of the substance component analysis device described above.

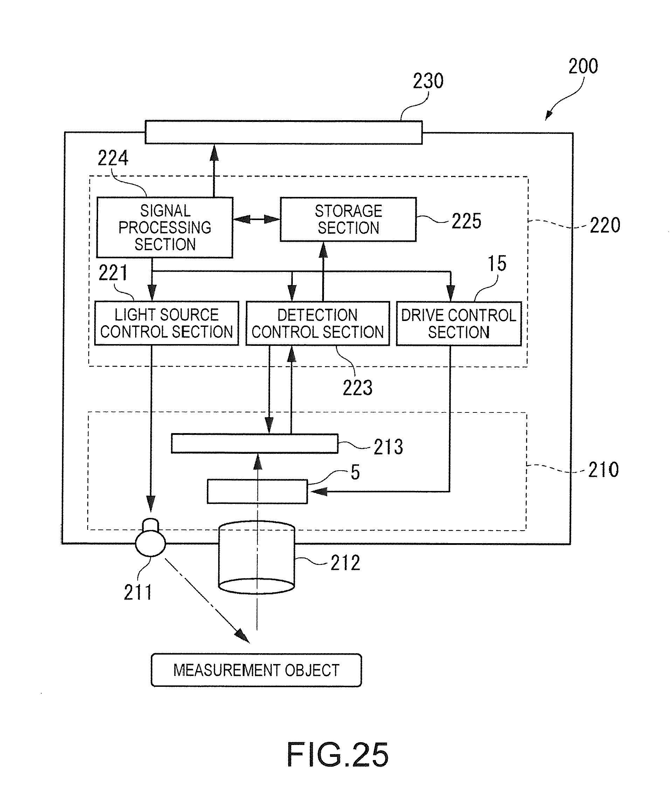

Fig. 25 is a diagram showing a schematic configuration of the food analysis device as an example of the electronic apparatus using the optical module according to the invention.

As shown in Fig. 25, the food analysis device 200 is provided with a detector 210 (the optical module), a control section 220, and a display section 230. The detector 210 is provided with a light source 211 for emitting light, an image pickup lens 212 to which the light from a measurement object is introduced, the variable wavelength interference filter 5 for dispersing the light thus introduced from the image pickup lens 212, and an image pickup section 213 (a detection section) for detecting the light thus dispersed. It should be noted that it is also possible to adopt a configuration in which any one of the variable wavelength interference filters 5A, 5B, and the optical filter device 600 described above is disposed instead of the variable wavelength interference filter 5.

Further, the control section 220 is provided with a light source control section 221 for performing lighting/extinction control of the light source 211 and brightness control of the light source in the lighting state, the drive control section 15 for controlling the variable wavelength interference filter 5, a detection control section 223 for controlling the image pickup section 213 and obtaining a spectral image taken by the image pickup section 213, a signal processing section 224, and a storage section 225. It should be noted that in the case of using the variable wavelength interference filter 5B, such a drive control section 15A as described in the third embodiment can also be used instead of the drive control section 15.

In the food analysis device 200, when the system is started up, the light source control section 221 controls the light source 211, and the light source 211 irradiates the measurement object with the light. Then, the light reflected by the measurement object passes through the image pickup lens 212 and then enters the variable wavelength interference filter 5. The variable wavelength interference filter 5 is driven with the driving method described in the first embodiment under the control by the drive control section 15. Thus, the light with the target wavelength can accurately be taken out from the variable wavelength interference filter 5. Then, the light thus taken out is imaged by the image pickup section 213 formed of, for example, a CCD camera. Further, the light thus imaged is stored in the storage section 225 as the spectral image. Further, the signal processing section 224 controls the drive control section 15 to vary the voltage value to be applied to the variable wavelength interference filter 5 to thereby obtain the spectral image corresponding to each wavelength.

Then, the signal processing section 224 performs an arithmetic process on the data of each pixel in each of the images stored in the storage section 225 to thereby obtain the spectrum in each pixel. Further, the storage section 225 stores, for example, information related to a component of food corresponding to the spectrum, and the signal processing section 224 analyzes the data of the spectrum thus obtained based on the information related to the food stored in the storage section 225, and then obtains the food component and the content thereof included in the detection object. Further, the calorie of the food, the freshness thereof, and so on can also be calculated based on the food components and the contents thus obtained. Further, by analyzing the spectral distribution in the image, it is possible to perform extraction of the portion with low freshness in the food as a test object, and further, it is also possible to perform detection of a foreign matter or the like included in the food.

Then, the signal processing section 224 performs a process of making the display section 230 display the information of the components, the contents, the calorie, the freshness, and so on of the food as the test object obtained in such a manner as described above.

Further, although the example of the food analysis device 200 is shown in Fig. 25, it is also possible to use substantially the same configuration as such a non-invasive measurement device of other information as described above. For example, the configuration can be used as a biological analysis device for performing analysis of a biological component such as measurement and analysis of a biological fluid such as blood. If a device of detecting ethyl alcohol is cited as a device for measuring the biological fluid component such as blood, such a biological analysis device can be used as a device for detecting the influence of alcohol to the driver to thereby prevent driving under the influence of alcohol. Further, the configuration can also be used as an electronic endoscopic system equipped with such a biological analysis device.

Further, the configuration can also be used as a mineral analysis device for performing component analysis of minerals.

Further, the optical module and the electronic apparatus according to the invention can be applied to the following devices.

For example, it is also possible to transmit data with the light having each of the wavelengths by temporally varying the intensity of the light having each of the wavelengths, and in this case, it is possible to extract the data transmitted with the light having a specific wavelength by dispersing the light having the specific wavelength using the variable wavelength interference filter provided to the optical module, and then making the light receiving section receive the light. Therefore, by processing the data in the light having each of the wavelengths using the electronic apparatus equipped with such a data extracting optical module, it is also possible to perform optical communication.

Further, the electronic apparatus can be applied to a spectroscopic camera for picking up the spectral image and a spectroscopic analysis device by dispersing the light with the optical module according to the invention. As an example of such a spectroscopic camera, an infrared camera incorporating the variable wavelength interference filter can be cited.

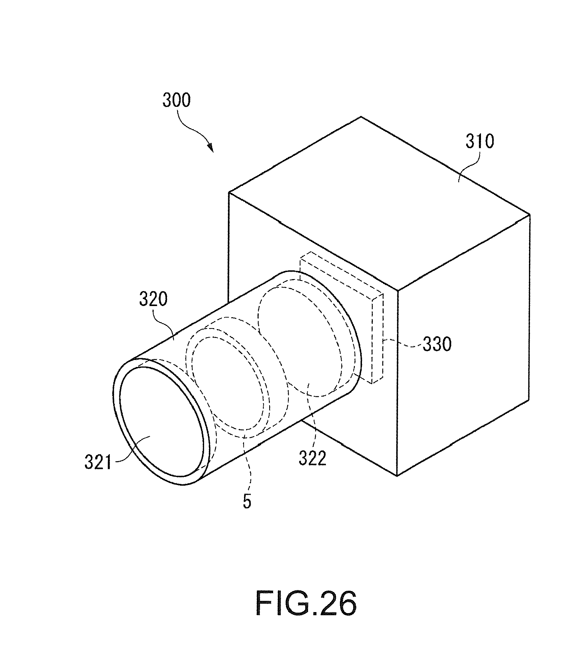

Fig. 26 is a schematic diagram showing a schematic configuration of the spectroscopic camera. As shown in Fig. 26, the spectroscopic camera 300 is provided with a camera main body 310, an image pickup lens unit 320, and an image pickup section 330.

The camera main boy 310 is a part to be gripped and operated by the user.

The image pickup lens unit 320 is provided to the camera main body 310, and guides the image light input thereto to the image pickup section 330. Further, as shown in Fig. 26, the image pickup lens unit 320 is configured including an objective lens 321, an imaging lens 322, and the variable wavelength interference filter 5 disposed between these lenses. It should be noted that it is also possible to adopt a configuration in which any one of the variable wavelength interference filters 5A, 5B, and the optical filter device 600 described above is disposed instead of the variable wavelength interference filter 5.

The image pickup section 330 is formed of a light receiving element, and takes the image of the image light guided by the image pickup lens unit 320.

In such a spectroscopic camera 300, by transmitting the light with the wavelength to be the imaging object using the variable wavelength interference filter 5, the spectral image of the light with a desired wavelength can be taken.

On this occasion, since the drive control section (not shown) drives the variable wavelength interference filter 5 using the driving method according to the invention described in the first embodiment and the third embodiment described above with respect to each of the wavelengths, it is possible to accurately take out the image light of the spectral image of the target wavelength.

Further, the optical module according to the invention can be used as a band-pass filter, and can also be used as, for example, an optical laser device for dispersing and transmitting only the light with a wavelength in a narrow band centered on a predetermined wavelength out of the light in a predetermined wavelength band emitted by the light emitting element using the variable wavelength interference filter.

Further, the optical module according to the invention can also be used as a biometric authentication device, and can be applied to, for example, an authentication device of blood vessels, a fingerprint, a retina, an iris, and so on using the light in a near infrared range or a visible range.

Further, the optical module and the electronic apparatus can be used as a concentration detection device. In this case, the infrared energy (the infrared light) emitted from the substance is dispersed by the variable wavelength interference filter and is then analyzed, and the concentration of the test object in a sample is measured.

As described above, the optical module and the electronic apparatus according to the invention can be applied to any device for dispersing predetermined light from the incident light. Further, since the optical module according to the invention can disperse the light with a plurality of wavelength components with a single device as described above, the measurement of the spectrum of a plurality of wavelengths and detection of a plurality of components can be performed with accuracy. Therefore, compared to the related-art device of taking out desired wavelengths with a plurality of devices, miniaturization of the optical module and the electronic apparatus can be promoted, and the optical module and the electronic apparatus can preferably be used as, for example, a portable or in-car optical device.

Besides the above, a specific structure to be adopted when putting the invention into practice can arbitrarily be replaced with another structure and so on within the range in which the advantages of the invention can be achieved.

**Claims**

1. An optical module comprising:

    a first substrate;
    a second substrate disposed so as to be opposed to the first substrate;
    a first reflecting film provided to the first substrate;
    a second reflecting film provided to the second substrate, and opposed to the first reflecting film;
    a first control electrode provided to the first substrate;
    a second control electrode provided to the second substrate, and opposed to the first control electrode; and
    a tilt control section adapted to make a first control current flow through the first control electrode in a first direction along a substrate surface of the first substrate, and make a second control current flow through the second control electrode in a second direction along a substrate surface of the second substrate, the second direction being opposite to the first direction in a plan view of the first substrate and the second substrate viewed from a substrate thickness direction.

2. The optical module according to Claim 1, wherein a gap dimension between the first control electrode and the second control electrode is smaller than a gap dimension between the first reflecting film and the second reflecting film.

3. The optical module according to Claim 2, wherein the first control electrode is disposed outside the first reflecting film in the plan view, and
   the second control electrode is disposed outside the second reflecting film in the plan view.

4. The optical module according to Claim 2, wherein the first control electrode is disposed so as to overlap the first reflecting film in the plan view, and
   the second control electrode is disposed so as to overlap the second reflecting film in the plan view.

5. The optical module according to one of the preceding claims, wherein
   at least either one of the first control electrode and the second control electrode is provided with an insulating film formed on a surface opposed to the other of the first control electrode and the second control electrode.

6. The optical module according to one of the preceding claims, further comprising:

a gap changing section adapted to change a gap dimension between the first reflecting film and the second reflecting film.

7. The optical module according to Claim 6, wherein the tilt control section makes the first control current and the second control current flow during a period until fluctuation of the gap dimension is settled when the gap changing section changes the gap dimension.

8. An optical module comprising:

at least one first reflecting film having electrical conductivity, and adapted to reflect a part of incident light and transmit a part of the incident light;
at least one second reflecting film having electrical conductivity, opposed to the first reflecting film, and adapted to reflect a part of the incident light and transmit a part of the incident light; and
a tilt control section adapted to make a first control current flow through the first reflecting film in a first direction along a surface direction of the first reflecting film, and make a second control current flow through the second reflecting film in a second direction along a surface direction of the second reflecting film, the second direction being opposite to the first direction in a plan view of the first reflecting film and the second reflecting film viewed from a film thickness direction.

9. The optical module according to Claim 8, further comprising:

a first substrate provided with the first reflecting film; and
a second substrate provided with the second reflecting film.

10. The optical module according to Claim 8 or 9, further comprising:

a gap changing section adapted to change a gap dimension between the first reflecting film and the second reflecting film.

11. The optical module according to Claim 10, wherein the tilt control section makes the first control current and the second control current flow during a period until fluctuation of the gap dimension is settled when the gap changing section changes the gap dimension.

12. The optical module according to one of Claims 8 to 11, wherein
the first reflecting films are electrically connected to each other, and
the second reflecting films are disposed so as to correspond respectively to the first reflecting films, and are electrically connected to each other.

13. The optical module according to one of the preceding claims, further comprising:

a gap detection section adapted to detect a gap dimension between the first reflecting film and the second reflecting film,
wherein the tilt control section controls the first control current and the second control current in accordance with the gap dimension detected by the gap detection section.

14. An electronic apparatus comprising:

an optical module according to one of the preceding claims and
a control section adapted to control the optical module.

15. An optical module comprising:

a first substrate;
a first reflecting film provided to the first substrate;
a second reflecting film opposed to the first reflecting film;
a first control electrode, which is provided to the first substrate, and through which a first control current flows in a first direction along a substrate surface of the first substrate; and
a second control electrode, which is provided to a same base member as the second reflecting film so as to be opposed to the first control electrode, and through which a second control current flows in a second direction opposite to the first direction in a plan view viewed from a thickness direction of the first substrate.

FIG. 1

EP 2 759 818 A2

FIG. 2

FIG. 3

FIG. 4

FIG. 5

FIG. 6

FIG. 7

FIG. 8

FIG. 9

FIG.10

FIG.11

542 (54)

54B

54

54

54A

541 (54)

54

**FIG.12**

552 (55)

55A

55

55

55B

551 (55)

**FIG.13**

FIG.14

EP 2 759 818 A2

FIG.15

39

FIG.16

FIG.17

55

572 (572E)

572E2

572E1

572D1

572D2

572 (572D)

571 (571E)

571E1

571E2

571D1

571D2

571 (571D)

54

# FIG.18

55

572

572A1

572A2

571 (571E)

571E1

571E2

571D1

571D2

571 (571D)

54

# FIG.19

541 (54)  542 (54)

54A

54

54

541 (54)  54  542 (54)  54B

541 (54)  54  542 (54)

# FIG.20

625 615A 626 622 621 5 51 650

624  640

601 617 614 615 613 630 611 612 615 614 610

616  616  620

600

# FIG.21

430

CONTROL DEVICE    432                                    431

| COLORIMETRIC SENSOR<br>CONTROL SECTION |    433    | LIGHT SOURCE<br>CONTROL SECTION |

COLORIMETRIC<br>PROCESSING SECTION

400

420                                                    410

LIGHT<br>SOURCE<br>DEVICE

15

11

DRIVE<br>CONTROL<br>SECTION

411

5

412

COLORIMETRIC SENSOR

A

# FIG.22

FIG.23

FIG.24

EP 2 759 818 A2

FIG.25

FIG.26

**EP 2 759 818 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7243963 A